# EUROPÄISCHE PATENTSCHRIFT

(11) **EP 3 613 662 B1**
(45) Veröffentlichungstag und Bekanntmachung des Hinweises auf die Patenterteilung: **23.03.2022**
(21) Anmeldenummer: 19000368.1
(22) Anmeldetag: 08.08.2019
(51) Int. Cl.: B62M 9/127

(54) **HINTERRAD-KETTENSCHALTWERK MIT EXZENTRISCHER SEILZUG-UMLENKROLLEN-ANORDNUNG MIT ÜBERSETZUNGSVERHÄLTNIS**
REAR WHEEL CHAIN DERAILLEUR WITH ECCENTRIC CABLE DEFLECTION ROLLER ASSEMBLY WITH REDUCTION RATIO
DÉRAILLEUR DE CHAÎNE POUR ROUE ARRIÈRE AVEC AGENCEMENT DE ROULEAUX DE CHANGEMENT DE DIRECTION DE CÂBLE EXCENTRIQUE AVEC RAPPORT DE RÉDUCTION

(30) Priorität: 22.08.2018 DE 102018214218
(43) Veröffentlichungstag der Anmeldung: 26.02.2020
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- DE-A1- 19 915 334
- FR-A- 1 328 972
- US-A- 4 161 124
- US-A- 4 470 823

## Beschreibung

Die vorliegende Erfindung betrifft ein Kettenschaltwerk für eine Hinterrad-Kettenschaltung eines Fahrrads, umfassend:
- ein Basisbauteil, welches dazu ausgebildet ist, während seines bestimmungsgemäßen Schaltbetriebs relativ zum Fahrradrahmen unbeweglich an einem Fahrrad befestigt zu sein,
- eine Bewegungskopplungsvorrichtung und
- eine Kettenführungsanordnung, welche mittels der Bewegungskopplungsvorrichtung relativ zum Basisbauteil translatorisch verlagerbar mit dem Basisbauteil gekoppelt ist,
- eine Seilzug-Festlegeformation, welche zur Abstützung einer Seilhülle und zur Durchleitung eines Seils eines von einer Schalt-Betätigungsvorrichtung zum Kettenschaltwerk verlaufenden Schalt-Seilzug-Abschnitts ausgebildet ist,
- eine Seilzug-Übersetzungsvorrichtung, welche um eine Drehachse drehbar am Basisbauteil angeordnet ist,
wobei die Seilzug-Übersetzungsvorrichtung eine Schalt-Umlenkkontur aufweist, welche die Drehachse mit größerem radialen Abstand umgibt, und eine Verlagerungs-Umlenkkontur aufweist, welche die Umlenkachse mit kleinerem radialen Abstand umgibt, wobei die Schalt-Umlenkkontur und die Verlagerungs-Umlenkkontur zur gemeinsamen Drehbewegung um die Drehachse miteinander verbunden sind, wobei die Schalt-Umlenkkontur dazu ausgebildet ist, den Schalt-Seilzug-Abschnitt längs eines Schalt-Umschlingungsbereichs anliegend aufzunehmen, und wobei die Verlagerungs-Umlenkkontur dazu ausgebildet ist, einen zwischen der Verlagerungs-Umlenkkontur und der Bewegungskopplungsvorrichtung verlaufenden Verlagerungs-Seilzug-Abschnitt längs eines Verlagerungs-Umschlingungsbereichs anliegend aufzunehmen.

Eine solche Kettenradschaltung ist aus der DE 199 15 334 A1 bekannt. Die bekannte Kettenradschaltung verwendet zwei konzentrische Umlenkrollen, welche am Basisbauteil um die Drehachse drehbar angeordnet sind. Es sind in der DE 199 15 334 A1 zwei unterschiedliche Ausgestaltungsformen gezeigt, nämlich eine, bei welcher der Schalt-Seilzug-Abschnitt und der Verlagerungs-Seilzug-Abschnitt Abschnitte ein und desselben körperlichen Seils sind, die an unterschiedlichen Längsabschnitten des einen Seils ausgebildet sind, und eine weitere Ausführungsform, gemäß welcher jeder der genannten Abschnitte an einem gesonderten Seil ausgebildet, das mit einem seiner Enden jeweils drehfest mit der dem jeweiligen Seilzug-Abschnitt zugeordneten Umlenkrolle verbunden ist.

Die aus der DE 199 15 334 A1 bekannten Umlenkrollen haben in dem für einen Schaltbetrieb an einem Fahrrad relevanten Umschlingungsbereich konstanten radialen Abstand von der Drehachse.

Für das von der Seilzug-Übersetzungsvorrichtung bereitgestellte Übersetzungsverhältnis kommt es im jeweiligen Betriebszustand, also in der jeweiligen Drehstellung der Seilzug-Übersetzungsvorrichtung auf das Verhältnis der jeweiligen radialen Abstände jenes Ortes der Schalt-Umlenkkontur und der Verlagerungs-Umlenkkontur an, an welchem der der jeweiligen Umlenkkontur zugeordnete Seilzug-Abschnitt von der Seilzug-Übersetzungsvorrichtung weg verläuft. Das ist für die Schalt-Umlenkkontur das der Seilzug-Festlegeformation näher gelegene Ende des Schalt-Umschlingungsbereichs und das ist für die Verlagerungs-Umlenkkontur das der Bewegungskopplungsvorrichtung näher gelegene Ende des Verlagerungs-Umschlingungsbereichs. Abhängig von der jeweiligen Drehstellung der Seilzug-Übersetzungsvorrichtung sind die Umschlingungsbereiche der Schalt-Umlenkkontur und der Verlagerungs-Umlenckontur unterschiedlich groß, wobei in der Regel die Summe der beiden Umschlingungsbereiche, gemessen in Umschlingungswinkel um die Drehachse, unabhängig von der Drehstellung der Seilzug-Übersetzungsvorrichtung etwa konstant bleibt, da die Abwicklung des einen Seilzug-Abschnitts von der einen Umlenkkontur eine Aufwickelbewegung des jeweils anderen Seilzug-Abschnitts auf die jeweils andere Umlenkkontur bewirkt und umgekehrt.

Mit zunehmender Anzahl von Ritzeln an der Hinterradachse und damit von Schaltstufen der Hinterrad-Kettenschaltung nimmt der translatorische Bewegungsweg der Kettenführungsanordnung zu, welcher notwendig ist, um eine Kettenführungsebene der Kettenführungsanordnung komplanar mit einer zur Hinterradachse orthogonalen Mittelebene eines jeden Ritzels anzuordnen. Diese komplanare Anordnung einer Kettenführungsebene der Kettenführungsanordnung mit der genannten Ritzelmittelebene muss für alle Ritzel einer Hinterrad-Ritzelanordnung möglich sein, damit der bereitgestellte Schaltstufenumfang voll nutzbar ist.

Dabei ist zusätzlich zu beachten, dass die Ritzmittelebenen der Ritzel etwa äquidistant angeordnet sind. Die Kettenführungsanordnung muss daher von einer beliebigen komplanaren Anordnung bezüglich der Ritzelmittelebene eines Ritzels zu der axial nächst möglichen komplanaren Anordnung etwa stets den gleichen Verlagerungsweg zurücklegen. Dabei soll möglichst die notwendige Schaltbewegung des Schalt-Seilzug-Abschnitts ausgehend von einer Schaltvorrichtung etwa am Lenker des Fahrrads, ebenfalls etwa konstant bleiben. Dabei kann es jedoch sein, dass die Bewegungskopplungsvorrichtung, welche die Kettenführungsanordnung translatorisch verlagerbar mit dem Basisbauteil verbindet, aufgrund ihrer eigenen Kinematik abhängig von ihrer jeweiligen Betriebsstellung unterschiedlich lange Verlagerungswege benötigt, um die Kettenführungsebene der Kettenführungsanordnung in konstanten Inkrementen translatorisch zu verlagern.

Es ist daher Aufgabe der vorliegenden Erfindung, das eingangs genannte Kettenschaltwerk derart zu verbessern, dass selbst dann, wenn Verlagerungswege der Bewegungskopplungsvorrichtung abhängig von ihrer Betriebsstellung unterschiedlich groß sein müssen, um ein vorbestimmtes im Wesentlichen konstantes Verlagerungsinkrement der Kettenführungsanordnung zu bewirken, hierfür stets im Wesentlichen derselbe Schaltweg des Schalt-Seilzug-Abschnitts zurückzulegen ist. Somit kann der Fahrradfahrer unabhängig davon, zwischen welchen Schaltstufen am Hinterrad er schalten möchte, an seiner Schalt-Betätigungsvorrichtung stets dieselbe SchaltBetätigung ausführen.

Diese Aufgabe löst die vorliegende Erfindung an einem Kettenschaltwerk der eingangs genannten Art dadurch, dass der größere radiale Abstand oder/und der kleinere radiale Abstand über den jeweiligen Umschlingungsbereich hinweg einen nicht-konstanten Wert aufweist, so dass die Seilzug-Übersetzungsvorrichtung über ihren im Betrieb wirksamen Drehwinkelbereich um die Drehachse ein von der Drehstellung der Seilzug-Übersetzungsvorrichtung relativ zum Basisbauteil abhängiges veränderliches Übersetzungsverhältnis bereitstellt.

Anders als bei der aus der DE 199 15 334 A1 bekannten Kettenradschaltung ist das von der Seilzug-Übersetzungsvorrichtung bereitgestellte Übersetzungsverhältnis über den im Betrieb der Seilzug-Übersetzungsvorrichtung wirksamen Drehwinkelbereich nicht mehr konstant, sondern weist abhängig von der Drehstellung der Seilzug-Übersetzungsvorrichtung unterschiedliche Werte auf.

Im Detail definiert das Verhältnis zwischen dem radialen Abstand der Schalt-Umlenckontur am Ort des der Seilzug-Festlegeformation näher gelegenen Endes des Schalt-Umschlingungsbereichs von der Drehachse und dem radialen Abstand der Verlagerungs-Umlenkkontur am Ort des der Bewegungskopplungsvorrichtung näher gelegenen Endes des Verlagerungs-Umschlingungsbereichs von der Drehachse das Übersetzungsverhältnis der Seilzug-Übersetzungsvorrichtung.

Es sei an dieser Stelle klargestellt, dass die genannte translatorische Bewegung der Kettenführungsanordnung relativ zum Basisbauteil nicht notwendigerweise eine geradlinige Bewegung ist und in der Realität in den meisten Fällen einer krummlinigen Bahn folgen wird. "Translatorisch" ist die Bewegung der Kettenführungsanordnung dann, wenn sie im Wesentlichen rotationsfrei bezüglich einer in der Kettenführungsebene der Kettenführungsanordnung liegenden Rotationsachse erfolgt. Wie weiter unten ausgeführt ist, kann zur vorteilhaften Minderung einer Kettenschrägstellung zwischen dem Kettenschaltwerk und einer vorderen, mit Tretkurbeln bewegungsgekoppelten Kettenblattanordnung eine geringfügige Drehung der Kettenführungsanordnung um eine in der Kettenführungsebene der Kettenführungsanordnung liegende Rotationsachse zugelassen sein. Diese Rotation sollte ausgehend von einer zur Hinterradachse orthogonalen Ausrichtung der Kettenführungsebene in jede Richtung betragsmäßig nicht größer als 9° sein. Die Kettenführungsanordnung kann ein mit der Bewegungskopplungsvorrichtung gekoppeltes Bewegungsteil und eine mit dem Bewegungsteil verbundene Kettenführung aufweisen. Eine Rotation der Kettenführung relativ zum Bewegungsteil um eine zu ihrer Kettenführungsebene orthogonale Rotationsachse ist zur Spannung der die hintere Kettenschaltung durchlaufenden Fahrradkette nicht nur möglich, sondern in der Regel erwünscht. Die Kettenführungsebene der Kettenführungsanordnung wird dabei in der Regel durch eine an der Kettenführung rotierbar gelagerte Kettenführungsrolle definiert, etwa durch eine zur Rotationsachse der Kettenführungsrolle orthogonale Mittelebene der Kettenführungsrolle, welche einen Zahnkranz der Kettenführungsrolle in seiner axialen Mitte schneidet.

In der Kettenführungsebene der Kettenführungsanordnung ist außerdem mit Abstand von der Kettenführungsrolle bevorzugt eine Spannrolle angeordnet. Die Kettenführungsrolle ist dabei die im Schaltbetrieb der Bewegungskopplungsvorrichtung näher gelegene der beiden Rollen. Kettenführungsrolle und Spannrolle drehen somit um parallele, jedoch mit Abstand voneinander angeordnete Rotationsachsen.

Weiter sei darauf hingewiesen, dass die eingangs genannten Seilzug-Abschnitte: Schalt-Seilzug-Abschnitt und Verlagerungs-Seilzug-Abschnitt, zunächst nicht notwendiger Bestandteil des Kettenschaltwerks sind und zur Bestimmung, ob ein Kettenschaltwerk alle Merkmale des Hauptanspruchs benutzt, auch nicht benötigt werden. Das der Seilzug-Festlegeformation näher gelegene Ende des Schalt-Umschlingungsbereichs ergibt sich aus einer zu einer Seil-Durchleitungsformation der Seilzug-Festlegeformation verlaufenden Tangente an die Schalt-Umlenkkontur. Die Seil-Durchleitungsformation gestattet dabei einen Durchgang des Seils des Schalt-Seilzug-Abschnitts, hält jedoch dessen Seilhülle zurück. Diese Tangente ist auch ohne Vorhandensein des Schalt-Seilzug-Abschnitts ermittelbar. Folglich ist auch der Ort des zur Ermittlung des Übersetzungsverhältnisses der Seilzug-Übersetzungsvorrichtung relevanten Endes des Schalt-Umschlingungsbereichs ohne Schalt-Seilzug-Abschnitt ermittelbar. In einem in der Praxis besonders vorteilhaften Fall erstrecken sich Schalt- und Verlagerungsumschlingungsbereich jeweils über einen Winkelbereich von zwischen 140° und 150°, insbesondere von zwischen 143° und 147°.

Gleiches gilt für das der Bewegungskopplungsvorrichtung näher gelegene Ende des Verlagerungs-Umschlingungsbereichs. Dieses Ende befindet sich dort, wo der Verlagerungs-Seilzug-Abschnitt von der Verlagerungs-Umschlingungskontur zur Bewegungskopplungsvorrichtung hin abläuft. Auch dieser Ort ist durch eine Tangente an die Verlagerungs-Umschlingungskontur ermittelbar, welche von der Verlagerungs-Umschlingungskontur hin zu der nächstgelegenen gemeinsam mit der Bewegungskopplungsvorrichtung beweglichen Struktur verläuft, die zur Aufnahme des von der Verlagerungs-Umschlingungskontur kommenden Verlagerungs-Seilzug-Abschnitts ausgebildet ist.

Grundsätzlich sind in der vorliegenden Anmeldung Seilzugwege, welche von der Seilzug-Übersetzungsvorrichtung zu einer Schaltbetätigungsvorrichtung am Lenker oder allgemein im Griffbereich eines Fahrradfahrers verlaufen, mit dem Vor-Begriff "Schalt-" bezeichnet, da diese Seilwege eine Schaltabsicht des Fahrradfahrers an das Kettenschaltwerk übertragen.

Ebenso sind Seilwege, welche sich von der Seilzug-Übersetzungsvorrichtung zur Bewegungskopplungsvorrichtung erstrecken, mit dem Begriff "Verlagerungs-" gekennzeichnet, da eine Bewegung dieses Seilwegs unmittelbar eine Verlagerung der Kettenführungsanordnung bewirkt.

Wiederum gilt für das vorliegende Kettenschaltwerk, dass die Summe an Umschlingungswinkel von Schalt-Umschlingungsbereich und Verlagerungs-Umschlingungsbereich, gemessen in Winkeleinheiten, in dem für einen Schaltbetrieb des Kettenschaltwerks relevanten Drehwinkelbereich der Seilzug-Übersetzungsvorrichtung in etwa konstant ist. Dies bedeutet, dass die Abwicklung des einen Seilzug-Abschnitts von der ihm zugeordneten Umlenkkontur einer Aufwicklung des jeweils anderen Seilzug-Abschnitts auf die jeweils andere ihm zugeordnete Umlenkkontur entspricht und umgekehrt.

Bevorzugt liegen die von der jeweiligen Umlenkkontur in Richtung von der Seilzug-Übersetzungsvorrichtung weg ablaufenden Äste des Schalt-Seilzug-Abschnitts einerseits und des Verlagerungs-Seilzug-Abschnitts andererseits auf unterschiedlichen Seiten der Drehachse.

Das veränderliche Übersetzungsverhältnis der Seilzug-Übersetzungsvorrichtung kann konstruktiv in einfacher Weise dadurch bereitgestellt werden, dass sich wenigstens eine Umlenkkontur aus Schalt- und Verlagerungs-Umlenkkontur nicht-kreisförmig um die Drehachse erstreckt. Bevorzugt ist aus Gründen einer möglichst effektiven Bauraumausnutzung und zur Vermeidung unerwünschter Bauraumbeanspruchung die kleinere der beiden Umlenkkonturen bezüglich der Drehachse exzentrisch ausgebildet. Daher ist bevorzugt zur Realisierung des von der Drehstellung abhängigen veränderlichen Übersetzungsverhältnisses vorgesehen, dass sich die Verlagerungs-Umlenkkontur derart exzentrisch um die Drehachse erstreckt, dass der radiale Abstand der Verlagerungs-Umlenkkontur von der Drehachse, ausgehend von einem minimalem Verlagerungs-Umschlingungsbereich, mit zunehmendem Umschlingungswinkel des Verlagerungs-Umschlingungsbereichs zunächst bis zu einem Minimalwert des kleineren Radius abnimmt und ausgehend von diesem wieder größer wird, vorzugsweise stetig bis zum Erreichen des maximalen Verlagerungs-Umschlingungsbereichs größer wird. Ebenso ist bevorzugt, dass der größere Abstand der Schalt-Umlenkkontur von der Drehachse der Seilzug-Übersetzungsvorrichtung im betriebsrelevanten Drehbereich der Schalt-Umlenkkontur konstant ist, wie weiter unten näher erläutert ist.

Bevorzugt ist der Ort des Minimalwert des kleineren Radius näher an einem von der Bewegungskopplungsvorrichtung weiter entfernt gelegenen Längsende des Verlagerungs-Umschlingungsbereichs gelegen als an dem der Bewegungskopplungsvorrichtung näher gelegenen Längsende des Verlagerungs-Umschlingungsbereichs. Hierdurch kann eine vorteilhaft asymmetriesche Schaltkinematik der Bewegungskopplungsvorrichtung erzielt werden. Ebenso bevorzugt ist der Maximalwert des kleineren Radius an dem der Bewegungskopplungsvorrichtung näher gelegenen Längsende des Verlagerungs-Umschlingungsbereichs gelegen.

Grundsätzlich kann die Bewegungskopplungsvorrichtung eine beliebige Vorrichtung sein, welche die Kettenführungsanordnung relativ zum Basisbauteil translatorisch verlagert. In der Praxis der Fahrradtechnik hat es sich jedoch seit Jahren bewährt, dass die Bewegungskopplungsvorrichtung ein Parallelogrammlenkergetriebe umfasst. Dieses Getriebe weist zwei Parallelogrammlenker auf, welche jeweils einen basisbauteilseitigen Anlenkbereich und einen kettenführungsseitigen Anlenkbereich aufweisen, wobei jeder Parallelogrammlenker an seinem basisbauteilseitigen Anlenkbereich um eine Basis-Lenkerachse schwenkbar mit dem Basisbauteil verbunden ist und an seinem kettenführungsseitigen Anlenkbereich um eine Kettenführungs-Lenkerachse schwenkbar mit der Kettenführungsanordnung, insbesondere mit deren Bewegungsteil verbunden ist. Die vier Lenkerachsen des Parallelogrammlenkergetriebes bilden parallele Kanten eines virtuellen Parallelepipeds.

Auch wenn bevorzugt die Abstände der Lenkerachsen paarweise gleich groß sind, der Parallelepiped somit ein exaktes Parallelogramm als Grundfläche aufweist, muss eine solche exakte Parallelogrammform der Parallelepiped-Grundfläche nicht unbedingt eingehalten werden. So können in zueinander parallele Richtungen zu messende Lenkerachsen-Abstände geringfügig unterschiedliche Beträge aufweisen. Damit kann erreicht werden, dass sich die Kettenführungsanordnung mit zunehmender Annäherung an ihre betriebsmäßigen Extremstellungen, das sind die Positionen der kleinsten und der größten Schaltstufe am Hinterrad, geringfügig zu einer vorderen Kettenblattanordnung bei Tretkurbeln des das Kettenschaltwerk tragenden Fahrrads hin dreht. So kann eine Schrägstellung der Fahrradkette zwischen vorderer Kettenblattanordnung und hinterem Kettenschaltwerk gemindert werden. Beispielsweise können hierzu die Abstände der Kettenführungs-Lenkerachsen einen geringfügig anderen Abstand, insbesondere kürzeren Abstand aufweisen als die Basis-Lenkerachsen.

Ein der Bewegungskopplungsvorrichtung näher gelegenes Längsende des Verlagerungs-Seilzug-Abschnitts ist im Schaltbetrieb mit einem der Parallelogrammlenker des Parallelogrammlenkergetriebes gekoppelt. Dieser Parallelogrammlenker wird nachfolgend als "Master-Lenker" bezeichnet. Der jeweils andere Parallelogrammlenker ist über das Basisbauteil und die mit dem Master-Lenker zur gemeinsamen Bewegung gekoppelt.

Um sicherzustellen, dass die Orientierung des mit dem Master-Lenker gekoppelten Seilendes des Verlagerungs-Seilzug-Abschnitts relativ zum Master-Lenker unabhängig von der Betriebsstellung des Parallelogrammlenkergetriebes ist und somit eine unabhängig von der Betriebsstellung des Parallelogrammlenkergetriebes konstante Kraftwirkung und Bewegungswirkung auf den Master-Lenker entfaltet, kann das Kettenschaltwerk bevorzugt eine Kurvenscheibe aufweisen, welche mit einem der Parallelogrammlenker als Master-Lenker zur gemeinsamen Bewegung verbunden ist, wobei die Kurvenscheibe dazu ausgebildet ist, ein zur gemeinsamen Bewegung mit dem Master-Lenker gekoppeltes Seilende des Verlagerungs-Seilzug-Abschnitts in Richtung vom Parallelogrammlenker weg längs eines Anlagebereichs an einer an der Kurvenscheibe ausgebildeten Anlagebahn anliegend zu führen.

Das mit dem Master-Lenker gekoppelte Seilende kann unmittelbar an der Kurvenscheibe festlegbar, etwa klemmbar sein, wobei die mit dem Master-Lenker zur gemeinsamen Bewegung gekoppelte Kurvenscheibe als Kraft- und Bewegungsvermittler eine Kopplung des Seilendes mit dem Master-Lenker bewirkt. Zur Erzielung einer vorteilhaft geringen Anzahl an Bauteilen kann ein Klemmkraft-Bauteil, etwa eine Klemmschraube, mit welcher das Seilende an der Kurvenscheibe klemmbar ist, auch zur Bewegungskopplung von Kurvenscheibe und Master-Lenker beitragen oder diese sogar allein bewirken.

Die Erstreckung des Anlagebereichs längs der an der Kurvenscheibe ausgebildeten Anlagebahn hängt dabei von der Betriebsstellung des Master-Lenkers ab. In der Regel wird eine Aufwicklung eines Teils des Verlagerungs-Seilzug-Abschnitts auf der Verlagerungs-Umlenkkontur zu einer Abwicklung des Verlagerungs-Seilzug-Abschnitts von der Anlagebahn der Kurvenscheibe führen und umgekehrt. In einem in der Praxis vorteilhaften Fall erstreckt sich der Anlagebereich über einen Winkelbereich von weniger als 90°.

Durch die Verwendung der Kurvenscheibe kann die erforderliche Exzentrizität der Verlagerungs-Umlenkkontur verringert werden, denn zum einen sorgt die Kurvenscheibe, wie oben dargelegt, für eine konstante Seilzugrichtung des Verlagerungs-Seilzug-Abschnitts relativ zum Master-Lenker und zum anderen kann die Kurvenscheibe selbst exzentrisch bezüglich einer Lenkerachse des Master-Lenkers ausgebildet sein. In diesem Falle lässt sich die Exzentrizität der bevorzugt exzentrisch ausgebildeten Verlagerungs-Umlenkkontur teilweise auf die Anlagebahn der Kurvenscheibe übertragen, sodass bei gleichzeitig exzentrischer Ausbildung von Verlagerungs-Umlenkkontur einerseits und Anlagebahn der Kurvenscheibe andererseits jede der beiden Strukturen weniger Bauraum einnimmt, als wenn die Exzentrizität vollständig aufseiten der Verlagerungs-Umlenkkontur oder auch vollständig aufseiten der Kurvenscheibe läge.

Bevorzugt weist das Kettenschaltwerk einen Verlagerungs-Seilzug-Abschnitt auf, welcher den Master-Lenker einschließlich der gemeinsam mit ihm beweglichen Kurvenscheibe mit der Verlagerungs-Umlenkkontur zur gemeinsamen Bewegung koppelt. Dann kann eine besonders verlustfreie Bewegungsübertragung zwischen der Verlagerungs-Umlenkkontur und dem Master-Lenker dadurch erreicht werden, dass für wenigstens den halben gemeinsamen Bewegungsbereich von Kurvenscheibe und Verlagerungs-Umlenkkontur gilt, dass eine frei zwischen der Kurvenscheibe und der Verlagerungs-Umlenkkontur verlaufende Seillänge des Verlagerungs-Seilzug-Abschnitts unabhängig von der jeweiligen betriebsgemäßen Drehstellung von Kurvenscheibe und Verlagerungs-Umlenkkontur sowohl tangential zu der Anlagebahn der Kurvenscheibe als auch tangential zur Verlagerungs-Umlenkkontur verläuft. Bevorzugt gilt diese Bedingung für mehr als 75 % des gemeinsamen Bewegungsbereichs von Kurvenscheibe und Verlagerungs-Umlenkkontur.

Wie weiter oben bereits dargelegt, sei auch an dieser Stelle betont, dass dann, wenn die Kurvenscheibe mit ihrer Anlagebahn an dem Kettenschaltwerk angeordnet ist, das der Bewegungskopplungsvorrichtung näher gelegene Ende des Verlagerungs-Umschlingungsbereichs in einfacher Weise durch eine Gerade konstruierbar ist, die sowohl Tangente an die Verlagerungs-Umlenkkontur als auch an die Anlagebahn der Kurvenscheibe ist. Somit kann das Übersetzungsverhältnis der Seilzug-Übersetzungsvorrichtung abhängig von der Drehstellung ermittelt werden, ohne dass es hierfür eines körperlich vorhandenen Verlagerungs-Seilzug-Abschnitts bedarf.

Eine besonders wenig Bauraum einnehmende Struktur bei gleichzeitig großem Bewegungsweg der Kettenführungsanordnung kann dadurch erreicht werden, dass die Kurvenscheibe und die Verlagerungs-Umlenkkontur jeweils ebene Strukturen sind, wobei ihre Erstreckungsebenen einen Winkel von mehr als 65°, vorzugsweise von nicht weniger als 70° einschließen und einen Winkel von 90° oder weniger, vorzugsweise von nicht mehr als 80° einschließen.

Grundsätzlich kann die Kurvenscheibe an einem beliebigen Aufnahmebauteil aus Basisbauteil und Kettenführungsanordnung, insbesondere aus Basisbauteil (B-Knuckle) und Bewegungsteil (P-Knuckle), mittels eines eine Lenkerachse des Master-Lenkers definierenden Lagerbauteils zur gemeinsamen Drehung mit dem Master-Lenker um die Lenkerachse drehbar gelagert sein. Bevorzugt ist das Aufnahmebauteil das Basisbauteil, da dann die Baugruppe aus Master-Lenker und Kurvenscheibe weniger ausladend baut.

Zum Schutz einer das Lagerbauteil umgreifenden bzw. vom Lagerbauteil durchsetzten Lagerformation der Kurvenscheibe kann ein Bauteil aus Master-Lenker und dem Aufnahmebauteil eine längs der Lenkerachse auskragende und um die Lenkerachse verlaufende Schürze aufweisen, welche eine das Lagerbauteil umgreifende Lagerformation der Kurvenscheibe bezogen auf die Lenkerachse radial außen umgibt. Zusätzlich oder alternativ kann die Kurvenscheibe zwischen einem basisbauteilnäheren Abschnitt des Master-Lenkers und dem Basisabschnitt angeordnet sein, um die Kurvenscheibe möglichst vor unerwünschten äußeren Einflüssen abzuschirmen. Ein Bauteil aus Master-Lenker und Basisbauteil kann im Bereich der Anlenkung des Master-Lenkers am Basisbauteil mehrarmig, insbesondere zweiarmig ausgebildet sein und das jeweils andere Bauteil in axialer Richtung bezogen auf die basisbauteilseitige Lenkerachse gabelartig umgreifen. Bevorzugt ist die Kurvenscheibe axial zwischen den wenigstens zwei Armen des mehrarmigen Bauteils oder/und zwischen einem Arm des mehrarmigen Bauteils und dem davon umgriffenen Abschnitt des jeweils anderen Bauteils angeordnet. Aus Gründen einer bevorzugt guten Bewegungsführung bei gleichzeitig großem Lagerabstand ist der Master-Lenker das mehrarmige Bauteil, das einen Abschnitt des Basisbauteils axial umgreift. Diese die Kurvenscheibe wenigstens teilweise einhausende Bauart ist derart vorteilhaft, dass sich die Anmelderin vorbehält, gesonderten Schutz auch für ein Kettenschaltwerk der im ersten Absatz der vorliegenden Anmeldung genannten Art zu beanspruchen, welches die Kurvenscheibe wie in dem vorliegenden Absatz beschrieben wenigstens teilweise gegen die Außenumgebung abschirmt.

Zur einfachen und bauraumsparenden Festlegung des Bewegungsraums des Master-Lenkers bei gleichzeitig vorteilhaft niedriger Gesamtmasse der Kurvenscheibe kann die Kurvenscheibe eine Ausnehmung aufweisen, welche von einem weiteren Lagerbauteil durchsetzt ist, das eine Lenkerachse des jeweils anderen Lenkers des Parallelogrammlenkergetriebes definiert, welcher nicht Master-Lenker ist. Dann kann das weitere Lagerbauteil gemeinsam mit einem Randabschnitt der Ausnehmung einen mechanischen Endanschlag zur Begrenzung der Drehbewegung der Kurvenscheibe in wenigstens eine Drehrichtung bilden.

Eines oder beide der genannten Lagerbauteile kann ein Achsbauteil sein, welches relativ zum Aufnahmebauteil unbeweglich an diesem festgelegt ist. Dies kann ein einstückig mit dem Aufnahmebauteil ausgebildeter Achsstumpf sein oder ein unbeweglich im Aufnahmebauteil aufgenommener Achsstift.

Alternativ kann eines oder können beide der genannten Lagerbauteile ein Wellenbauteil sein, welches an dem ihn lagernden Parallelogrammlenker relativ zu diesem unbeweglich festgelegt ist. Wiederum kann das Lagerbauteil ein einstückig mit seinem zugeordneten Parallelogrammlenker ausgebildeter Wellenstumpf oder ein gesondertes Wellenbauteil sein, etwa ein drehfest mit dem Parallelogrammlenker verbundener Stift.

Je nach Ausgestaltung eines Fahrradrahmens kann sich durch Verwendung einer gefederten Hinterradaufhängung die Lage der Seilzug-Übersetzungsvorrichtung relativ zu dem vom Fahrradrahmen zur Schalt-Umlenkstruktur laufenden Teil des Schalt-Seilzug-Abschnitts beim Einfedern und Ausfedern ändern. Um zu verhindern, dass sich allein durch das Einfedern oder/und Ausfedern der an der Schalt-Umlenkkontur erzielte Schalt-Umschlingungsbereich ohne Schaltbetätigung durch den Fahrradfahrer ändert, ist bevorzugt die Seilzug-Festlegeformation um eine Wippenachse relativ zum Basisbauteil schwenkbar angeordnet.

Zum Schutz des die Schalt-Umlenkkontur anliegend umschlingenden Teils des Schalt-Seilzug-Abschnitts kann die Kettenschaltung ein Seilkanalbauteil aufweisen, welches relativ zum Basisbauteil unbeweglich an diesem festgelegt ist und welches gemeinsam mit der Schalt-Umlenkkontur einen Seilkanal für einen am Schalt-Umschlingungsbereich aufgenommenen Teil des Schalt-Seilzug-Abschnitts bildet. Der Seilkanal umgibt bevorzugt den am Schalt-Umschlingungsbereich aufgenommenen Teil des Schalt-Seilzug-Abschnitts in Umfangsrichtung um den Seilzug-Abschnitt. Besonders bevorzugt umgibt der Seilkanal den am Schalt-Umschlingungsbereich aufgenommenen Teil des Schalt-Seilzug-Abschnitts längs von wenigstens 330°, noch stärker bevorzugt von wenigstens 345° längs des Seilumfangs. Bevorzugt ragt zur Bildung eines möglichst dichten Seilkanals ein Abschnitt aus Schalt-Umlenkkontur und Seilkanalbauteil in eine Aufnahmenut am jeweils anderen Abschnitt. Da die Schalt-Umlenkkontur relativ zum Seilbauteil beweglich ist, ragt zur zusätzlichen Bewegungsführung bevorzugt die Schalt-Umlenkkontur in eine Aufnahmenut des Seilkanalbauteils.

Ein die Schalt-Umlenkkontur anliegend umschlingender Teil des Schalt-Seilzug-Abschnitts verläuft dann bevorzugt in dem so gebildeten Seilkanal. Bevorzugt ist die Seilzug-Festlegeformation an dem Seilkanalbauteil schwenkbar gelagert, so dass der Schalt-Seilzug-Abschnitt möglichst unmittelbar von der Seilzug-Festlegeformation kommend in den Seilkanal einlaufen kann.

Damit der Seilkanal unabhängig von der jeweiligen Drehstellung der Seilzug-Übersetzungsvorrichtung gebildet werden bzw. gebildet bleiben kann, sind die Schalt-Umlenkkontur und das Seilkanalbauteil wenigstens in einem Abschnitt, in dem sie zur Bildung des Seilkanals aneinander anliegen, jeweils mit konstantem radialem Abstand von der Drehachse der Seilzug-Übersetzungsvorrichtung ausgebildet. Dann kann die Schalt-Umlenkkontur relativ zum Seilkanalbauteil um die Drehachse der Seilzug-Übersetzungsvorrichtung drehen, ohne dass der Seilkanal dadurch aufgelöst wird. Lediglich die Länge des Seilkanals kann sich durch die Drehung der Schalt-Umlenkkontur ebenso ändern, wie die Länge des Schalt-Umschlingungsbereichs.

Ein vorteilhaft spannungsfreier Verlauf des Schalt-Seilzug-Abschnitts kann dadurch erhalten werden, dass die Wippenachse parallel zur Drehachse der Seilzug-Übersetzungsvorrichtung orientiert ist. Zusätzlich oder alternativ ändert sich dann, wenn die Wippenachse den Seilkanal durchsetzt, der Schalt-Umschlingungsbereich beim Ein- oder/und Ausfedern des gefederten Hinterrads nicht oder nur in einem vernachlässigbaren Umfang, etwa um nicht mehr als 5 % bezogen auf den Umschlingungswinkel des Schalt-Umschlingungsbereichs im ausgefederten Zustand.

Für die Bereitstellung einer Ein- und Ausfederbewegung ohne Einfluss auf den Betriebszustand des Kettenschaltwerks kann die Seilzug-Festlegeformation in einem für einen Schaltbetrieb bereiten Zustand um etwa wenigstens 30° zwischen seinen beiden entgegengesetzten Endstellungen schwenken.

Konstruktiv kann die Ausbildung des Basisbauteils zur Befestigung am Fahrrad dadurch realisiert sein, dass das Basisbauteil eine Befestigungsformation aufweist, welche durch ihre Gestalt eine Befestigungsachse definiert, längs der sich ein Befestigungsbauteil, wie Schraube, Radachse und dergleichen, zur Befestigung des Basisbauteils am Fahrrad erstreckt. Beispielsweise kann die Befestigungsformation eine oder mehrere koaxiale Befestigungsösen aufweisen. Die Befestigungsachse kann dann eine virtuelle, die wenigstens eine Befestigungsöse orthogonal zentrisch durchsetzende Achse sein.

Zur Erleichterung eines Aus- oder/und Einbaus eines Hinterrads in eine Hinterradaufnahme an einem Fahrradrahmen des auch das vorliegende Kettenschaltwerk tragenden Fahrrads kann das Basisbauteil und mit ihm das übrige Kettenschaltwerk nach einem Lösen von Befestigungsmitteln, welche das Basisbauteil am Fahrrad befestigen, um die genannte Befestigungsachse relativ zum Fahrrad schwenkbar sein. Mit "Lösen" ist dabei nicht notwendigerweise ein Entfernen der Befestigungsmittel bezeichnet. Es reicht vielmehr eine Lockerung der im Schaltbetrieb festen bzw. festgezogenen Befestigungsmittel aus.

Um auch während dieser Montageverschwenkung sicherzustellen, dass eine Seilhülle des Schalt-Seilzug-Abschnitts sicher in der Seilzug-Festlegeformation aufgenommen ist und bleibt, weist die Seilzug-Festlegeformation gemäß einer vorteilhaften Weiterbildung eine Gleithülse auf, welche zur gleitenden Aufnahme der Seilhülle ausgebildet ist. Die Länge der Gleithülse entspricht bevorzugt dem Abstand des basisbauteilseitigen Lagerortes der Gleithülse von der Befestigungsachse, multipliziert mit wenigstens π/9. Dies stellt sicher, dass das Basisbauteil ausgehend von seiner schaltbereiten Betriebsposition um 20° aus dem Bewegungsweg des ein- oder auszubauenden Hinterrads geschwenkt werden kann. Ein noch größerer Schwenkweg von 30° bei gleichzeitig sicherer Aufnahme der Seilhülle in der Gleithülse ist erreicht, wenn die Länge der Gleithülse dem Abstand des basisbauteilseitigen Lagerortes der Gleithülse von der Befestigungsachse multipliziert mit wenigstens π/6 entspricht. Die Gleithülse weist einen körperlichen Anschlag für die Seilhülle auf, von welchem die Seilhülle beim Verschwenken des Basisbauteils in nur einer Richtung weg gleiten kann.

Aus Gründen einer effizienten Bauraumnutzung, ohne meist knapp vorhandenen Bauraum durch technisch nicht benötigte Bauteilabschnitte zu belegen, können sich sowohl eine die Schalt-Umlenkkontur tragende Schalt-Umlenkstruktur als auch eine die Verlagerungs-Umlenkkontur tragende Verlagerungs-Umlenkstruktur radial außerhalb ihrer unvermeidlichen Drehlagerformation zur drehbaren Lagerung am Basisbauteil um weniger als 270°, bevorzugt um weniger als 220° um die Drehachse der Seilzug-Übersetzungsvorrichtung erstrecken. Selbstverständlich soll jedoch nicht ausgeschlossen sein, dass wenigstens eine Struktur aus Schalt- und Verlagerungs-Umlenkstruktur auch radial außerhalb ihrer Drehlagerformation als Seilrolle bzw. Seil-Exzenterrolle vollständig um die Drehachse umläuft.

Da der Schalt-Seilzug-Abschnitt und der Verlagerungs-Seilzug-Abschnitt in unterschiedliche Richtungen auf die Seilzug-Übersetzungsvorrichtung zu bzw. von dieser weg verlaufen, ist es zur Ausbildung der jeweiligen Umlenkkonturen mit nur minimal nötiger Erstreckung vorteilhaft, wenn die Schalt-Umlenkkontur und die Verlagerungs-Umlenkkontur relativ zueinander um einen vorbestimmten Versatzwinkel um die Drehachse versetzt angeordnet sind. Der Versatz ist dabei anhand der Lage derjenigen Bereiche der Umlenkkonturen zu bestimmten, welche zur Umschlingung durch ein Seil eines Seilzug-Abschnitts ausgebildet sind.

Eine wiederum kompakte, Bauraum sparende Ausgestaltung des Kettenschaltwerks bei gleichzeitig großen Verlagerungswegen der Kettenführungsanordnung kann erreicht werden, wenn die Lenkerachsen des Parallelogrammlenkergetriebes einen von Null verschiedenen Abstand zur Befestigungsachse aufweisen, diese also nicht schneiden. Besonders große Verlagerungswege bei vorgegebener Gestalt des Kettenschaltwerks können erhalten werden, wenn die Lenkerachsen mit der Befestigungsachse einen Winkel im Bereich von 75° bis 105° einschließen. Bevorzugt verlaufen die Lenkerachsen mit Abstand von der Befestigungsachse orthogonal zu dieser.

Weiterhin können große Verlagerungswege der Kettenführungsanordnung ohne Vergrößerung der Schaltbetätigungswege des Schalt-Seilzug-Abschnitts durch Verwendung von längeren Parallelogrammlenkern erzielt werden. Bevorzugt beträgt der Lagerabstand der Lenkerachsen desselben Parallelogrammlenkers wenigstens 46 mm, bevorzugt wenigstens 48 mm. Diese lange Ausbildung von Parallelogrammlenkern führt zu Problemen in der Kraft- oder Bewegungsübertragung. Auch diese Probleme können durch das oben bezeichnete veränderliche Übersetzungsverhältnis gemildert oder sogar beseitigt werden. Die vorliegende Anmeldung ermöglicht daher die Verwendung der genannten großen Lagerabstände von Parallelogrammlenkern, ohne dass dadurch Veränderungen an Schaltbetätigungsvorrichtungen erforderlich sind. Diese können weiter verwendet werden. Die Lagerabstände der Parallelogrammlenker sollten nicht größer als 58 mm sein.

Zur besonders sicheren Anbringung des Basisbauteils an entweder einem Ausfallende eines Fahrradrahmens oder an einer Hinterrad-Achsformation eines Fahrrads kann das Basisbauteil wenigstens zwei längs der oben genannten Befestigungsachse mit Abstand voneinander angeordnete Befestigungsarme aufweisen. Dies gestattet die besonders stabile Anordnung eines Bauteils eines Fahrrads zwischen den Befestigungsarmen.

Zur Ausbildung des Kettenschaltwerks mit geringem Bauraum kann dann die Seilzug-Übersetzungsvorrichtung an einem der beiden Befestigungsarme drehbar gelagert und im Bereich zwischen den beiden Befestigungsarmen angeordnet sein. Bevorzugt ist der die Seilzug-Übersetzungsvorrichtung drehbar lagernde Befestigungsarm der in schaltbereitem Zustand einer vertikalen Fahrradlängsmittelebene näher gelegene innere Befestigungsarm.

Das Kettenschaltwerk kann einen von einer Schalt-Betätigungsvorrichtung zum Kettenschaltwerk verlaufenden Schalt-Seilzug-Abschnitt und einen zwischen der Verlagerungs-Umlenkkontur und der Bewegungskopplungsvorrichtung verlaufenden Verlagerungs-Seilzug-Abschnitt aufweisen. Diese Abschnitte können Abschnitte eines einzigen körperlichen Seils sein oder können jeweils durch ein gesondertes Seil gebildet sein, das mit seinem der Seilzug-Übersetzungsvorrichtung näher gelegenen Längsende an der Seilzug-Übersetzungsvorrichtung, insbesondere an der ihm zugeordneten Umlenkkontur festgelegt sein.

Das vorliegende Kettenschaltwerk erlaubt aufgrund der Schalt-Umlenkstruktur eine vorteilhafte Vermeidung einer Seilschlaufe als Seil-Reserve im Bereich hinter der Hinterradachse eines Fahrrads. Vorteilhafterweise verläuft der Schalt-Seilzug-Abschnitt bezogen auf die Befestigungsachse axial zwischen den beiden Befestigungsarmen hindurch und zwar zwischen der Befestigungsachse und den basisbauteilseitigen Anlenkorten der Parallelogrammlenker.

Die vorliegende Erfindung betrifft außerdem ein Fahrrad mit einer Hinterrad-Kettenschaltung und mit einem Kettenschaltwerk, wie es oben beschrieben ist, wobei das Basisbauteil an der Hinterachse des Hinterrads oder an einem Ausfallende des Fahrradrahmens angeordnet ist oder/und wobei ein Teil des Schalt-Seilzug-Abschnitts durch die Kettenstrebe des Fahrradrahmens verläuft. Die Befestigungsachse des Basisbauteils verläuft bevorzugt parallel oder koaxial zur Hinterradachse des Fahrrads.

Die vorliegende Erfindung wird nachfolgend anhand der beiliegenden Zeichnungen dargestellt. Es stellt dar:
- Figur 1: eine grobschematische Seitenansicht eines Fahrrads mit erfindungsgemäßem Kettenschaltwerk,
- Figur 2: eine grobschematische Detailansicht des an ein Fahrrad montierten erfindungsgemäßen Kettenschaltwerks bei Betrachtung des Fahrrads in Längsrichtung von hinten,
- Figur 3: eine Seitenansicht des erfindungsgemäßen Kettenschaltwerks bei Betrachtung entlang der Hinterradachse des das Kettenschaltwerk tragenden Fahrrads,
- Figur 4: eine Betrachtung des Kettenschaltwerks in Fahrradlängsrichtung von vorne,
- Figur 5: eine perspektivische Ansicht des an die Hinterachse des Fahrrads montierten Kettenschaltwerks von schräg oben und schräg hinten (bezogen auf das das Kettenschaltwerk tragende Fahrrad),

- Figur 6: eine Ansicht des Basisbauteils mit Kurvenscheibe längs der Drehachse der Seilzug-Übersetzungsvorrichtung,
- Figur 7: das Basisbauteil mit Kurvenscheibe von Figur 6, wiederum betrachtet längs der Drehachse der Seilzug-Übersetzungsvorrichtung, jedoch von der bezüglich der Ansicht von Figur 6 entgegengesetzten Seite und
- Figur 8: das Basisbauteil mit Kurvenscheibe der Figuren 6 und 7 bei Betrachtung orthogonal zur Drehachse der Seilzug-Übersetzungsvorrichtung.

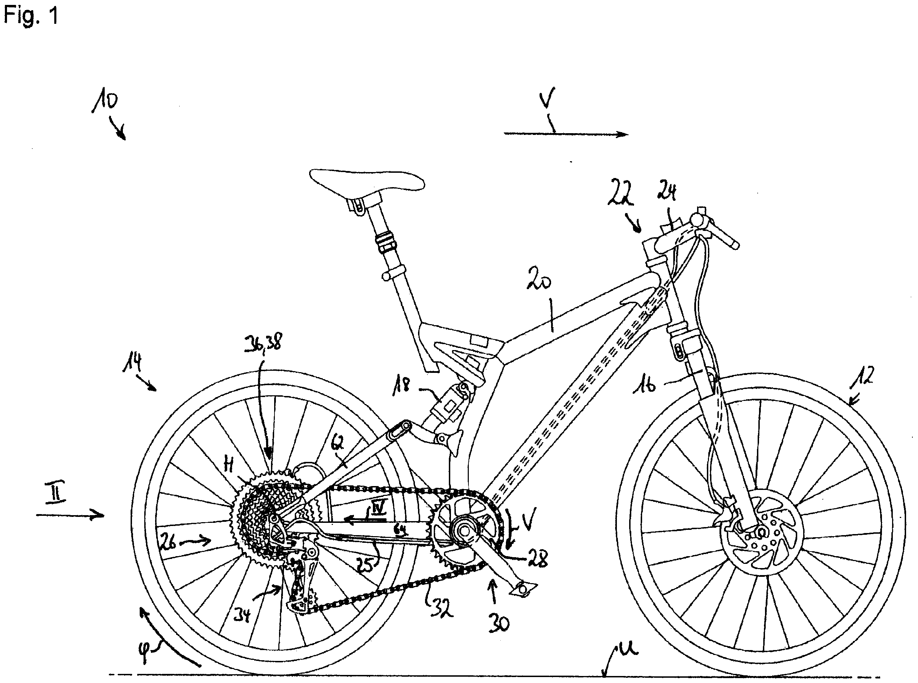

In Figur 1 ist ein Fahrrad allgemein mit 10 bezeichnet. Es umfasst ein Vorderrad 12 sowie ein Hinterrad 14, welche jeweils über Federvorrichtungen 16 bzw. 18 gefedert mit einem Rahmen 20 verbunden sind. Über einen Lenker 22 kann ein Fahrradfahrer die Richtung des Fahrrads beim Fahren ändern. Außerdem trägt der Lenker eine Schaltbetätigungsvorrichtung 24 zum Schalten einer hinteren Kettenschaltung 26.

Wie üblich weist das Fahrrad wenigstens ein vorderes Kettenblatt 28 auf, welches durch einen Tretkurbelsatz 30 zur Drehung angetrieben werden kann. Eine umlaufene Fahrradkette 32 ist durch ein hinteres Kettenschaltwerk 34 mit einem von mehreren Ritzeln 36 einer Hinterrad-Ritzelkassette 38 in kämmenden Eingriff bringbar. Da die Ritzel 36 der Ritzelanordnung 38 unterschiedliche Durchmesser aufweisen, kann so mittels des Kettenschaltwerks 34 die am Fahrrad 10 gewählte Antriebsübersetzung verändert werden.

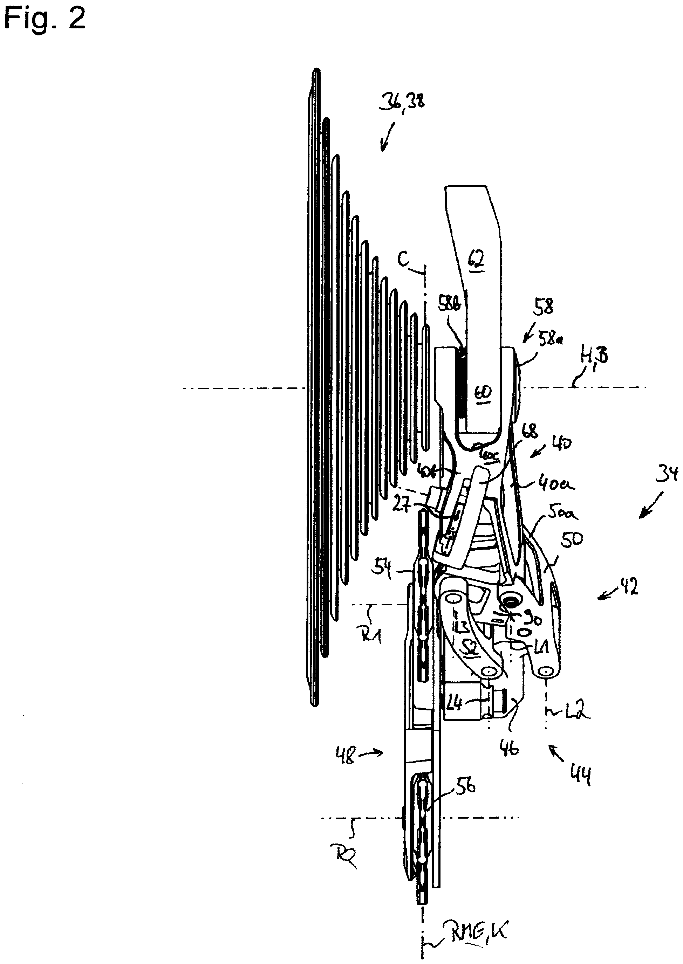

Nachfolgend wird im Zusammenhang mit den Figuren 2 bis 8 das Kettenschaltwerk 34 näher erläutert werden. Es sei darauf hingewiesen, dass die grobschematische Darstellung von Figur 1 ein Kettenschaltwerk 34 nur als Bauteil-Platzhalter zeigt. Die an dem Kettenschaltwerk 34 realisierten konstruktiven Details sind ausschließlich den Figuren 2 bis 8 zu entnehmen. Der Pfeil V gibt die Vorwärtsfahrtrichtung an.

Im Zusammenhang mit den Figuren 2 bis 5 wird nachfolgend eine erfindungsgemäße Ausführungsform des Kettenschaltwerks 34 näher beschrieben werden.

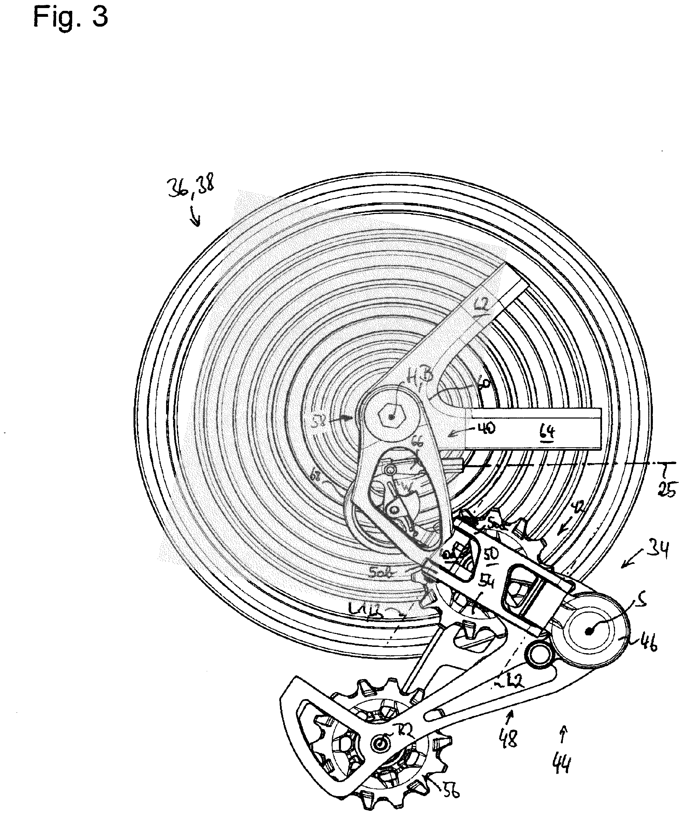

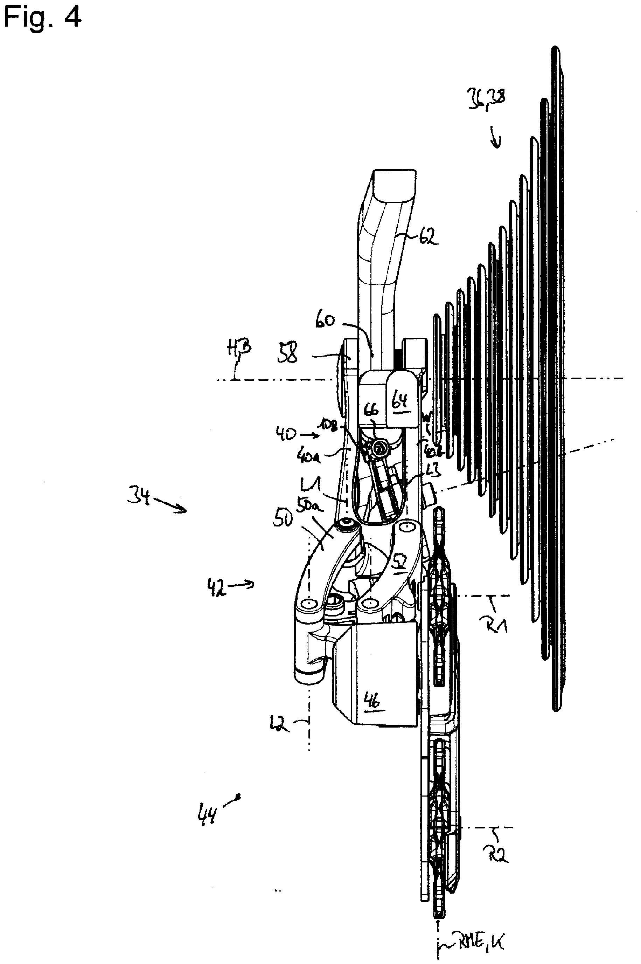

Figur 2 ist dabei eine Betrachtung des Kettenschaltwerks in Fahrradlängsrichtung von hinten, also längs des Pfeils II von Figur 1. Figur 3 ist eine Betrachtung des Kettenschaltwerks 34 orthogonal zur Zeichenebene von Figur 1 längs der Hinterradachse H des Hinterrads 14 von Figur 1. Figur 4 ist eine Betrachtung des Kettenschaltwerks 34 in Fahrradlängsrichtung von vorne, also längs des Pfeils IV in Figur 1.

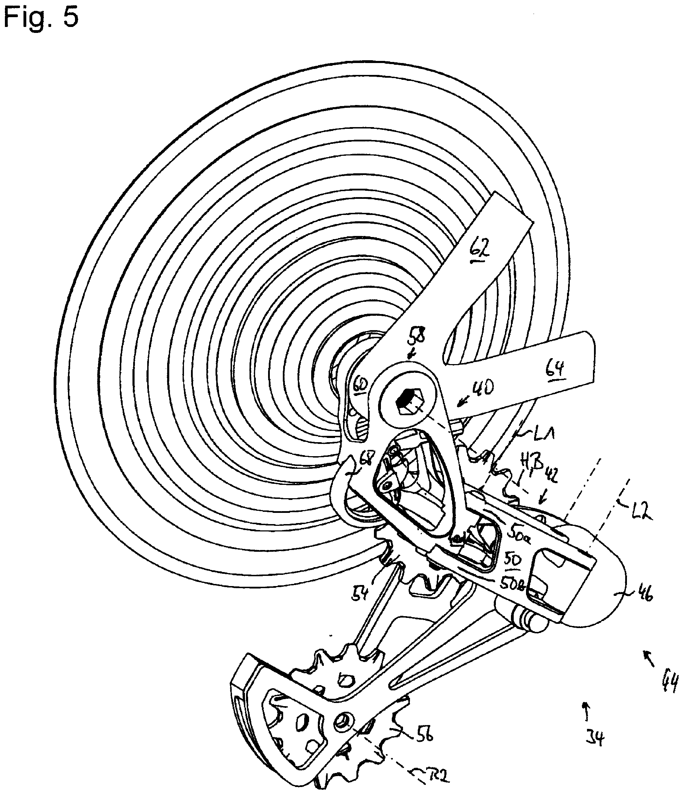

Figur 5 ist eine perspektivische Darstellung des Kettenschaltwerks 34 von schräg hinten und schräg oben.

Das Kettenschaltwerk 34 umfasst ein Basisbauteil 40, an welchem eine Bewegungskopplungsvorrichtung 42 in Gestalt eines Parallelogrammlenkergetriebes angelenkt ist, welche das Basisbauteil 40 mit einer Kettenführungsanordnung 44 verbindet. Die Kettenführungsanordnung 44 umfasst ein unmittelbar mit dem Parallelogrammlenkergetriebe 42 verbundenes Bewegungsteil 46 und eine um eine Spannachse S (siehe Figur 3) relativ zum Bewegungsteil 46 schwenkbare Kettenführung 48.

Wie in Figur 1 gezeigt ist, ist die Schaltbetätigungsvorrichtung 24 zur Betätigung des Kettenschaltwerks 34 über einen Schalt-Seilzug-Abschnitt 25 mit dem Kettenschaltwerk 34 verbunden. Durch diesen Schalt-Seilzug-Abschnitt 25 kann ein Fahrradfahrer seinen Wunsch, die am Hinterrad realisierte Schaltstufe durch Änderung des mit der Fahrradkette 32 in kämmendem Eingriff stehenden Ritzels 36 zu ändern.

Am Basisbauteil 40 ist ein äußerer Parallelogrammlenker 50 um eine Lenkerachse L1 schwenkbar angelenkt. Um eine hierzu parallele Lenkerachse L2 ist das Bewegungsteil 46 an dem vom Basisbauteil 40 fern liegenden Längsende des Parallelogrammlenkers 50 schwenkbar angelenkt. Wie in Figur 3 gezeigt ist, weist der äußere Parallelogrammlenker 50 im Bereich seiner Anlenkung an das Basisbauteil 40 einen oberen Lenkerarm 50a und einen unteren Lenkerarn 50b auf, welche einen Anlenkabschnitt 40d des Basisbauteils bezüglich der Lenkerachse L1 axial umgreifen.

Ebenso ist ein innerer, d. h. längs der Hinterradachse H näher bei der Ritzelkassette 38 gelegener innerer Parallelogrammlenker 52 um eine basisbauteilseitige Lenkerachse L3 am Basisbauteil 40 angelenkt und ist um eine kettenführungsseitige Lenkerachse L4 am Bewegungsteil 46 der Kettenführungsanordnung 48 angelenkt. Die Lenkerachsen L1 bis L4 sind zueinander parallel und bilden die Kanten eines virtuellen Spats.

Die Lenkerachsen L1 bis L4 sind außerdem orthogonal zur Hinterradachse H orientiert und sind mit Abstand von dieser vorgesehen. In einem fertig an das Fahrrad 10 montierten, schaltbereiten Zustand des Kettenschaltwerks 34 sind die Lenkerachsen L1 bis L4 bezüglich einer die Hinterradachse H enthaltenden Ebene parallel zum horizontalen Aufstandsuntergrund U, auf welchem das Fahrrad aufsteht, um etwa 45 bis 60° geneigt.

Die Kettenführung 48 weist eine Kettenführungsrolle 54 und eine Spannrolle 56 auf. Die beiden Rollen 54 und 56 sind um parallele Rollenachsen R1 bzw. R2 drehbar. Die Kettenführungsrolle 54 ist dabei jene Rolle, von welcher die in Vorwärtsfahrt-Antriebsrichtung V umlaufende Fahrradkette 32 zur Ritzelkassette 38 hin abläuft. Die Spannrolle 56 ist dabei jene Rolle, auf welche die in Vorwärtsfahrt-Antriebsrichtung V umlaufende Fahrradkette 32 vom vorderen Kettenblatt 28 kommend aufläuft.

Die beiden Rollen 54 und 56 sind insofern komplanar an der Kettenführung 48 angeordnet, als dass eine zu den Rollenachsen R1 und R2 orthogonale, die Rollen 54 und 56 in der bezogen auf die Rollenachsen R1 bzw. R2 axialen Mitte schneidende Rollenmittelebene RME für beide Rollen 54 und 56 dieselbe Ebene RME ist. Diese gemeinsame Rollenmittelebene RME von Kettenführungsrolle 54 und Spannrolle 56 ist die Kettenführungsebene K der Kettenführung 48 bzw. der Kettenführungsanordnung 44.

Durch das Parallelogrammlenkergetriebe 42 kann die Kettenführungsebene K der Kettenführung 48 translatorisch, also ohne Verdrehung um eine in der Kettenführungsebene K liegende Achse längs der Hinterradachse H verlagert werden. Durch komplanares Anordnen der Kettenführungsebene K mit einer zur Hinterradachse H orthogonalen Ritzelmittelebene C eines Ritzels 36, welche den Zahnkranz eines Ritzels 36 etwa in dessen axialer Mitte (bezogen auf die Hinterradachse H) schneidet, kann eine der zwölf Schaltstufen am Hinterrad 14 ausgewählt werden, die durch die Zwölf-Fach-Ritzelkassette 38 konstruktiv bereitgestellt sind.

Das Kettenschaltwerk 34 ist mit einer Befestigungsformation 58 an einem Ausfallende 60 des Fahrradrahmens 20 aufgenommen. An diesem Ausfallende 60 sind eine Sitzstrebe 62 und eine Kettenstrebe 64 des Rahmens 20 miteinander verbunden.

Die Befestigungsformation 58 mit zwei Befestigungsösen 58a und 58b definiert eine Befestigungsachse B, längs welcher die Befestigungsformation 58 des Basisbauteils 40 durch ein Befestigungsmittel, wie eine Befestigungsschraube, Steckachse und dergleichen, zur Befestigung am Fahrradrahmen 20 durchsetzbar ist. Im fertig montierten, schaltbereiten Zustand ist die Befestigungsachse B kollinear mit der Hinterradachse H oder, bei von den Figuren abweichender Anbringung, zur Hinterradachse H parallel.

Das Basisbauteil 40 weist einen äußeren Befestigungsarm 40a und einen inneren Befestigungsarm 40b auf, welche durch eine versteifende Brücke 40c, vorzugsweise an der im fertig montierten Zustand zur Fahrradrückseite weisenden Seite versteifend verbunden sein können.

In Figur 3 ist der Verlauf der Schalt-Seilzug-Anordnung 25, von der Schaltbetätigungsvorrichtung 24 kommend, strichpunktiert dargestellt. Der Schalt-Seilzug-Abschnitt 25 läuft in eine Seilzug-Festlegeformation 66 ein, welche um eine Wippenachse W schwenkbar an einem basisbauteilfesten Seilkanalbauteil 68 angelenkt ist.

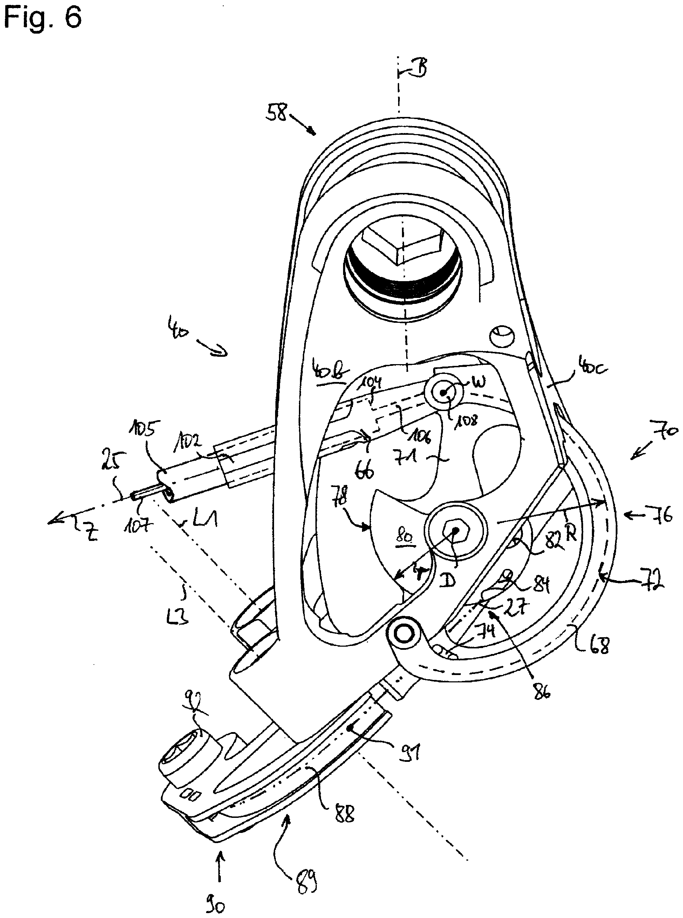

Der besseren Übersichtlichkeit halber wird die Konstruktion des Basisbauteils 40 mit seiner Vermittlung einer Schaltbetätigung der Schaltbetätigungsvorrichtung 24 zur Kettenführungsanordnung 44 anhand der Figuren 6 bis 8 erläutert.

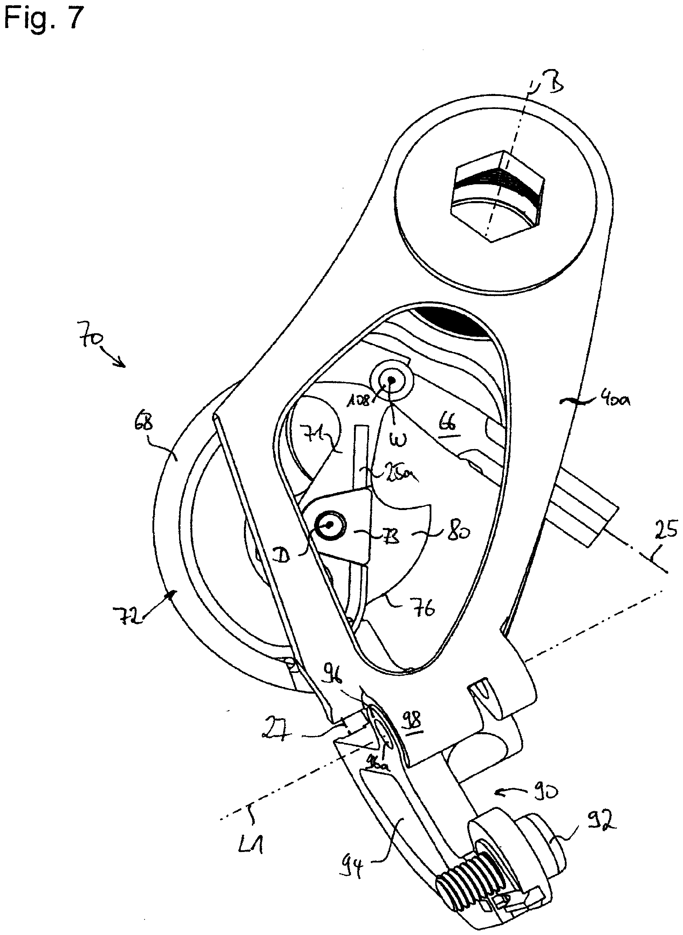

Wie insbesondere in Figur 6 zu erkennen ist, ist das Seilkanalbauteil 68 relativ zum Basisbauteil 40 unbeweglich mit diesem verbunden, genauer im dargestellten Beispiel mit dessen Befestigungsarm 40b. An diesem Befestigungsarm 40b ist eine Seil-Übersetzungsvorrichtung 70 um eine Drehachse D drehbar angeordnet, welche orthogonal zu den Zeichenebenen der Figuren 6 und 7 orientiert ist. Die Wippenachse W verläuft parallel zur Drehachse D der Seilzug-Übersetzungsvorrichtung 70.

Die Seilzug-Übersetzungsvorrichtung 70 umfasst eine sich etwa um 180° um die Drehachse D mit konstanter Entfernung erstreckende Schalt-Umlenkkontur 72, welche in das Seilkanalbauteil 68 einragt und mit dieser einen als Seilkanal um die Drehachse D umlaufenden Hohlraum bildet, in welchem ein Schalt-Umschlingungsbereich 76 gelegen ist, in welchem der Schalt-Seilzug-Abschnitt 25 an der Schalt-Umlenkkontur 72 anliegt. Das Seilkanalbauteil 68 weist einen zur Drehachse D offenen U-förmigen Querschnitt auf, welcher die Schalt-Umlenkkontur 72 von drei Seiten umgreift.

An einer Immobilisierungsformation 73 kann das der Seilzug-Übersetzungsvorrichtung 70 näher gelegene Längsende des Schalt-Seilzug-Abschnitts 25 an der Seilzug-Übersetzungsvorrichtung 70 festgelegt werden, etwa durch Klemmen. Die die Schalt-Umlenkkontur 72 aufweisende Schalt-Umlenkstruktur 71 hat an der Immobilisierungsformation 73 eine Nut 25a ausgebildet, in welche das Seil des Schalt-Seilzug-Abschnitts 25 eingelegt werden kann.

Das Seil des Schalt-Seilzug-Abschnitts 25 läuft etwa bei 74 in die durch das Seilkanalbauteil 68 verborgene Schalt-Umlenkkontur 72 ein und läuft längs des Schalt-Umschlingungsbereichs 76 bis etwa zum Ort der Wippenachse W anliegend an der Schalt-Umlenkkontur 72 um.

Durch einen Zug des Seils des Schalt-Seilzug-Abschnitts 25 kann der Ort 74 des Auflaufens des Seils des Schalt-Seilzug-Abschnitts 25 auf die Schalt-Umlenkkontur 72 von der Immobilisierungsformation 73 her in Figur 6 gegen den Uhrzeigersinn relativ zum Basisbauteil 40 und zu dem gemeinsam mit diesem verbundenen Seilkanalbauteil 68 um die Drehachse D verlagert werden. Da der Ort der Wippenachse W unabhängig von einer Bewegung des Schalt-Seilzug-Abschnitts 25 unbeweglich am Basisbauteil 40 festliegt, wird mit der Annäherung des Auflaufortes 74 an die Wippenachse W der Schalt-Umschlingungsbereich 76 verkürzt. Diese Verkürzung erfolgt gegen eine Federvorspannung der Kettenführungsanordnung 44 oder/und der Bewegungskopplungsvorrichtung 42. Durch Geben von Seil des Schalt-Seilzug-Abschnitts 25 wird durch die beschriebene Vorspannkraft die Schalt-Umlenkstruktur 71 mit dem Auflaufort 74 in Figur 6 im Uhrzeigersinn verlagert und dabei der Schalt-Umschlingungsbereich 76 wieder vergrößert.

Mit der Schalt-Umlenkkontur 72 drehfest um die Drehachse D verbunden ist eine Verlagerungs-Umlenkkontur 78, welche an einer sie tragenden Verlagerungs-Umlenkstruktur 80 ausgebildet ist.

Sowohl die Schalt-Umlenkkontur 72 wie auch Verlagerungs-Umlenkkontur 78 können jeweils als nutförmige Vertiefung in ihrer jeweils zugeordneten Struktur 71 bzw. 80 ausgebildet sein und so den jeweiligen zugeordneten Seilzug-Abschnitt axial bezüglich der Drehachse D führen.

An der Verlagerungs-Umlenkstruktur 80 ist eine Halteformation 82 vorgesehen, an welcher ein in seinem Verlauf strichpunktpunktiert angedeuteter Verlagerungs-Seilzug-Abschnitt 27 festlegbar ist. Ausgehend von der Halteformation 82 läuft das Seil des Verlagerungs-Seilzug-Abschnitts 27 etwa bei 84 auf die Verlagerungs-Umlenckontur 78 auf. In Figur 6 ist daher der Verlagerungs-Seilzug-Abschnitt 27 nahezu vollständig von der Verlagerungs-Umlenkkontur 78 abgewickelt.

Bei Betrachtung von Figur 6 wird deutlich, dass ausgehend von der dort gezeigten Betriebsstellung ein Zug des Schalt-Seilzug-Abschnitts 25 in Zugrichtung Z eine Drehung der Seilzug-Übersetzungsvorrichtung 70 im Gegenuhrzeigersinn um die Drehachse D bewirkt. Der Auflaufort 74 wird der Wippenachse W angenähert und dadurch der Schalt-Umschlingungsbereich 76 betragsmäßig verringert.

Die drehfest mit der Schalt-Umlenkstruktur 71 verbundene Verlagerungs-Umlenkstruktur 80 wird ebenfalls im Gegenuhrzeigersinn gedreht und dabei der Verlagerungs-Seilzug-Abschnitt 27 je nach Ausmaß der Zugbetätigung des Schalt-Seilzug-Abschnitts 25 auf die Verlagerungs-Umlenkkontur 78 aufgewickelt. Ein Verlagerungs-Umschlingungsbereich 86 an der Verlagerungs-Umlenkkontur 78 wird somit vergrößert.

Die Seilzug-Übersetzungsvorrichtung 70 weist dabei ein Übersetzungsverhältnis auf, welches abhängig von seiner Drehstellung ist. Da die Schalt-Umlenkkontur 72 mit konstantem großem Radius R um die Drehachse D umläuft, ändert sich der Wirkabstand des Schalt-Seilzug-Abschnitts 25 von der Drehachse D nicht.

Wie jedoch besonders gut in Figur 6 zu erkennen ist, nimmt der kleinere Radius r der Verlagerungs-Umlenkkontur 78, ausgehend von der in Figur 6 gezeigten Stellung, mit zunehmender Drehung der Verlagerungs-Umlenkkontur 78 im Gegenuhrzeigersinn um die Drehachse D zunächst bis zu einem Minimalwert ab und dann wieder zu. Der Winkelbereich, über welchen hinweg der Radius r ausgehend von der in Figur 6 gezeigten Stellung abnimmt, ist dabei erheblich kleiner als der daran im Gegenuhrzeigersinn anschließende Winkelbereich, in der Radius r wieder größer wird. Bevorzugt ist der Winkelbereich um die Drehachse D, in welchem sich der Radius r bei einem Fortschreiten von der Halteformation 82 des Verlagerungs-Seilzug-Abschnitts 27 weg zunimmt, wenigstens dreimal, stärker bevorzugt wenigstens viermal so groß wie der näher bei der Halteformation 82 gelegene Winkelbereich, in welchem der Radius r abnimmt. Die Verlagerungs-Umlenkkontur 78 ist bezüglich der Drehachse D exzentrisch, und zwar derart exzentrisch, dass ihr Radius r mit zunehmendem Winkelabstand von dem der Halteformation 82 nächstgelegenen Auflaufort 84 wie oben beschrieben zunächst ab- und dann wieder zunimmt. Dies bedeutet mit anderen Worten, dass der Radius r der Verlagerungs-Umlenkkontur 78 ausgehend von einem minimalen Verlagerungs-Umschlingungsbereich 86 mit größer werdendem Verlagerungs-Umschlingungsbereich 86 zunächst ab- und dann zunimmt. Der für die Berechnung des abhängig von der jeweiligen Betriebsstellung der Seilzug-Übersetzungsvorrichtung 70 abhängigen Übersetzungsverhältnisses ist der Radiusabstand der Verlagerungs-Umlenkkontur 78 an dem Ort, an welchem der Verlagerungs-Seilzug-Abschnitt 27 von der Verlagerungs-Umlenkkontur 78 zur Bewegungskopplungsvorrichtung 42 hin abläuft, das ist das der Bewegungskopplungsvorrichtung 42 näher gelegene Längsende des Verlagerungs-Umschlingungsbereichs 86.

Der Verlagerungs-Seilzug-Abschnitt 27 läuft tangential von der Verlagerungs-Umlenkkontur 78 ab und ebenso tangential auf eine Anlagebahn 88 einer Kurvenscheibe 90 auf.

Die Kurvenscheibe 90 ist zur gemeinsamen Drehung mittels einer Schraube 92 mit dem äußeren Parallelogrammlenker 50 zur gemeinsamen Schwenkbewegung um die Lenkerachse L1 verbunden. Mit der Schraube 92 ist nicht nur die Verbindung mit dem äußeren Parallelogrammlenker 50 herstellbar, sondern ist außerdem das von der Verlagerungs-Umlenkstruktur 80 fern liegende Seilende des Verlagerungs-Seilzug-Abschnitts 27 klemmbar. Wegen der so herstellbaren unmittelbaren Verbindung des Verlagerungs-Seilzug-Abschnitts 27 mit dem äußeren Parallelogrammlenker 50 wirkt dieser als Master-Lenker 50.

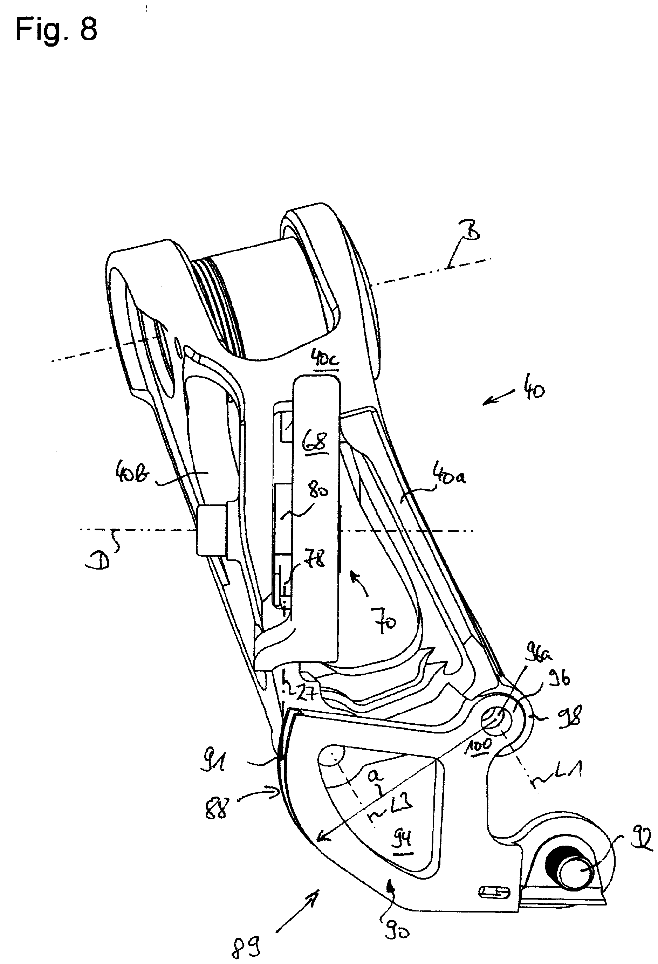

Wie vor allem in Figur 8 erkennbar ist, weist die Kurvenscheibe 90 eine Ausnehmung 94 auf, welche von einem die Lenkerachse L3 definierenden Stift als Achsbauteil (nicht dargestellt) durchsetzt ist. Ein Rand der Ausnehmung 94 dient folglich als mechanischer Endanschlag zur Begrenzung der Schwenkbewegung der Kurvenscheibe 90 um die Lenkerachse L1 und damit auch der Begrenzung der Schwenkbewegung des äußeren Parallelogramm-Lenkers 50.

Eine Lagerformation 96 der Kurvenscheibe 90 (siehe Figuren 7 und 8) weist eine Öffnung 96a auf, welche von einem die Lenkerachse L1 definierenden Achsbauteil, etwa einem Stift oder Wellenstumpf, durchsetzt ist. Somit kann dasselbe Bauteil, welches die Lenkerachse L1 des äußeren Parallelogrammlenkers 50 definiert, auch die Schwenkachse der Kurvenscheibe 90 definieren.

Nur die Lagerformation 96 umgibt die Lenkerachse L1 in einem radial der Lenkerachse L1 nahe gelegenen Bereich. Der radial weiter außen gelegene Teil der Anlagebahn 88 erstreckt sich nur längs eines Sektors um die Lenkerachse L1, der tatsächlich zur Anlage des Verlagerungs-Seilzug-Abschnitts 27 im Anlagebereich 89 der Anlagebahn 88 an die Kurvenscheibe 90 benötigt wird. Dieser Anlagebereich 89 erstreckt sich von der Klemmung des dem Master-Lenker 50 näher gelegenen Längsendes des Verlagerungs-Seilzug-Abschnitts 27 um die Lenkerachse L1 bis zu dem Ort 91, an welchem der Verlagerungs-Seilzug-Abschnitt 27 tangential zur Verlagerungs-Umlenkstruktur 80 hin von der Anlagebahn 88 abhebt. Der Ort 91 gibt somit das der Seilzug-Übersetzungsvorrichtung 70 nächstgelegene Ende des Anlagebereichs 89 an.

Auch die Anlagebahn 88 ist bezüglich der Lenkerachse L1, die sie umläuft, exzentrisch ausgebildet, d. h. der Abstand a der Anlagebahn 88 (siehe Figur 8) von der Lenkerachse L1 ändert sich längs des Umlaufs um die Lenkerachse L1. So kann die für die Kinematik des Master-Lenkers 50 vorteilhafte Exzentrizität der Umlenkung des Verlagerungs-Seilzug-Abschnitts 27 auf zwei Bauteile verteilt werden, nämlich auf die Verlagerungs-Umlenkstruktur 80 und auf die Kurvenscheibe 90. Somit kann jedes dieser Bauteile 80 und 90 kleiner ausgeführt sein, als wenn es die Exzentrizität der Umlenkung des Verlagerungs-Seilzug-Abschnitts 27 alleine zu realisieren hätte.

Durch die starre Verbindung von Kurvenscheibe 90 und Master-Lenker 50 verläuft das der Bewegungskopplungsvorrichtung 42 näher gelegene Seilende des Verlagerungs-Seilzug-Abschnitts 27 unabhängig von der jeweiligen Betriebsstellung des Master-Lernkers 50 stets mit demselben Zulaufwinkel zu dem Master-Lenker 50 hin. Das durch eine vorbestimmte Seilzugkraft des Verlagerungs-Seilzug-Abschnitts 27 am Master-Lenker 50 bewirkte Drehmoment um die Lenkerachse L1 ist daher von der Betriebsstellung des Master-Lenkers 50 unabhängig.

Es sei ausdrücklich darauf hingewiesen, dass am schaltbereiten Kettenschaltwerk 34 die Seilzugabschnitte 25 und 27 vorhanden sind, dass es jedoch ausreicht, lediglich eine Tangente einmal von der Schalt-Umlenkkontur 72 zur Wippenachse W der Seilzug-Festlegeformation 66 und einmal von der Verlagerungs-Umlenkkontur 78 zur Anlagebahn 88 der Kurvenscheibe 90 anzulegen ist, um auch ohne tatsächlich vorhandene Seilzug-Abschnitte die oben beschriebenen vorteilhaften räumlichen Zuordnungen der betroffenen Bauteile zu ermitteln.

Die Lagerformation 96 ist durch eine einstückig vom übrigen Basisbauteil 40 abstehende Schürze 98 des, welche die Lagerformation 96 um wenigstens 160°, vorzugsweise um wenigstens 180°, umgibt, vor äußeren mechanischen Einflüssen geschützt. Die Schürze 98 ist vorzugswiese teilzylindrisch oder teil-kegelstumpfförmig ausgebildet. Im fertig montierten Zustand befindet sich die Lagerformation 96 der Kurvenscheibe 90 bezüglich der Lenkerachse L1 axial eingehaust zwischen dem Basisbauteil 40 und dem äußeren Parallelogrammlenker 50, genauer zwischen dem Anlenkabschnitt 40d und dem unteren Lenkerarm 50b, sowie radial eingehaust durch die Schürze 98 des Basisbauteils 40. Lediglich der von der Lagerformation 96 zur Anlagebahn 88 auskragende Armabschnitt 100 der Kurvenscheibe 90 ragt aus der beschriebenen Einhausung radial bezüglich der Lenkerachse L1 hinaus.

Sowohl die Verlagerungs-Umlenkkontur 78 wie auch die Anlagebahn 88 sind jeweils ebene Strukturen. Ihre jeweiligen Erstreckungsebenen sind orthogonal zu ihrer jeweiligen Drehbewegungsachse orientiert, also einmal orthogonal zur Drehachse D und ein weiteres Mal orthogonal zur Lenkerachse L1. Gleiches gilt für die die Verlagerungs-Umlenkkontur 78 tragende Verlagerungs-Umlenkstruktur 80 und die die Anlagebahn 88 tragende Kurvenscheibe 90. Die Erstreckungsebenen der genannten Strukturen schließen einen Winkel von zwischen 65 und 90° ein.

Die Seilzug-Festlegeformation 66, welche um die Wippenachse W relativ zum Seilkanalbauteil 68 um etwa 30° verschwenkbar ist, weist eine Gleithülse 102 auf, welche sich von dem dem Seilkanalbauteil 68 fern liegenden Längsende bis zu einem Anschlag 104 für eine Seilhülle 105 des Schalt-Seilzug-Abschnitts 25 erstreckt. Ausgehend von dem Anschlag 104 führt eine Durchgangsöffnung 106 bis zu dem dem Seilkanalbauteil 68 näher gelegenen Längsende der Seilzug-Festlegeformation 66. Durch diese Durchgangsöffnung 106 kann nur das Seil 107 des Schalt-Seilzug-Abschnitts 25, nicht jedoch dessen Seilhülle 105 hindurch verlaufen. Die Seilhülle 105 liegt dagegen im schaltbereiten Betriebszustand des Kettenschaltwerks 34 am Anschlag 104 an und ist von diesem abhebbar.

Zum Ausbau des Hinterrads 14 aus dem Rahmen 20 kann ein das Basisbauteil 40 längs der Befestigungsachse B durchsetzendes Befestigungsmittel soweit gelöst werden, dass das Basisbauteil 40 und damit das gesamte Kettenschaltwerk 34 um die Befestigungsachse B, die vorliegend mit der Hinterradachse H zusammenfällt, verschwenkt werden kann. Um sicherzustellen, dass das Kettenschaltwerk 34 zur Unterstützung eines Ausbaus des Hinterrads 14 aus dem Rahmen 20 um einen Winkel ϕ (bei Betrachtung von Figur 1 im Uhrzeigersinn) verschwenkt werden kann, ohne dass die Seilhülle 105 des Schalt-Seilzug-Abschnitts 25 aus der Gleithülse 102 herausrutscht, beträgt die Länge der Gleithülse 102 von dem dem Seilkanalbauteil 68 fern liegenden Längsende bis zum Anschlag 104 dem Betrage nach wenigstens dem Produkt aus dem Abstand des basisbauteilseitigen Lagerortes 108 der Gleithülse 102 von der Befestigungsachse B bzw. der Hinterradachse H multipliziert mit dem Winkel ϕ im Bogenmaß, wobei ϕ wenigstens π/9, bevorzugt wenigstens π/6 beträgt.

## Patentansprüche

1. Kettenschaltwerk (34) für eine Hinterrad-Kettenschaltung (26) eines Fahrrads (10), umfassend:
- ein Basisbauteil (40), welches dazu ausgebildet ist, während seines bestimmungsgemäßen Schaltbetriebs relativ zu einem Fahrradrahmen (20) unbeweglich an dem Fahrrad (10) befestigt zu sein,
- eine Bewegungskopplungsvorrichtung (42) und
- eine Kettenführungsanordnung (44), welche mittels der Bewegungskopplungsvorrichtung (42) relativ zum Basisbauteil (40) translatorisch verlagerbar mit dem Basisbauteil (40) gekoppelt ist,
- eine Seilzug-Festlegeformation (66), welche zur Abstützung einer Seilhülle (105) und zur Durchleitung eines Seils (107) eines von einer Schalt-Betätigungsvorrichtung (24) zum Kettenschaltwerk (34) verlaufenden Schalt-Seilzug-Abschnitts (25) ausgebildet ist,
- eine Seilzug-Übersetzungsvorrichtung (70), welche um eine Drehachse (D) drehbar am Basisbauteil (40) angeordnet ist, wobei die Seilzug-Übersetzungsvorrichtung (70) eine Schalt-Umlenkkontur (72) aufweist, welche die Drehachse (D) mit größerem radialen Abstand (R) umgibt, und eine Verlagerungs-Umlenkkontur (78) aufweist, welche die Drehachse (D) mit kleinerem radialen Abstand (r) umgibt, wobei die Schalt-Umlenkkontur (72) und die Verlagerungs-Umlenkkontur (78) zur gemeinsamen Drehbewegung um die Drehachse (D) miteinander verbunden sind, wobei die Schalt-Umlenkkontur (72) dazu ausgebildet ist, den Schalt-Seilzug-Abschnitt (25) längs eines Schalt-Umschlingungsbereichs (76) anliegend aufzunehmen,
und wobei die Verlagerungs-Umlenkkontur (78) dazu ausgebildet ist, einen zwischen der Verlagerungs-Umlenkkontur (78) und der Bewegungskopplungsvorrichtung (42) verlaufenden Verlagerungs-Seilzug-Abschnitt (27) längs eines Verlagerungs-Umschlingungsbereichs (86) anliegend aufzunehmen,
**dadurch gekennzeichnet, dass** der größere radiale Abstand (R) oder/und der kleinere radiale Abstand (r) über den jeweiligen Umschlingungsbereich (76, 86) hinweg einen nicht-konstanten Wert aufweist, so dass die Seilzug-Übersetzungsvorrichtung (70) über ihren im Betrieb wirksamen Drehwinkelbereich um die Drehachse (D) ein von der Drehstellung der Seilzug-Übersetzungsvorrichtung (70) relativ zum Basisbauteil (40) abhängiges veränderliches Übersetzungsverhältnis bereitstellt.

2. Kettenschaltwerk (34) nach Anspruch 1,
**dadurch gekennzeichnet, dass** sich die Verlagerungs-Umlenkkontur (78) derart exzentrisch um die Drehachse (D) erstreckt, dass der radiale Abstand (r) der Verlagerungs-Umlenkkontur (78) von der Drehachse (D) ausgehend von einem minimalem Verlagerungs-Umschlingungsbereichs (86) mit zunehmendem Umschlingungswinkel des Verlagerungs-Umschlingungsbereichs (86) zunächst bis zu einem Minimalwert des kleineren Radius (r) abnimmt und ausgehend von diesem wieder größer wird, wobei bevorzugt der Ort des Minimalwert des kleineren Radius (r) näher an einem von der Bewegungskopplungsvorrichtung (42) weiter entfernt gelegenen Längsende des Verlagerungs-Umschlingungsbereichs (86) gelegen ist als an dem der Bewegungskopplungsvorrichtung (42) näher gelegenen Längsende des Verlagerungs-Umschlingungsbereichs (86).

3. Kettenschaltwerk (34) nach Anspruch 1 oder 2,
**dadurch gekennzeichnet, dass** die Bewegungskopplungsvorrichtung (42) ein Parallelogrammlenkergetriebe (42) umfasst, mit zwei Parallelogrammlenkern (50, 52), welche jeweils einen basisbauteilseitigen Anlenkbereich und einen kettenführungsseitigen Anlenkbereich aufweisen, wobei jeder Parallelogrammlenker (50, 52) an seinem basisbauteilseitigen Anlenkbereich um eine Basis-Lenkerachse (L1, L3) schwenkbar mit dem Basisbauteil (40) verbunden ist und an seinem kettenführungsseitigen Anlenkbereich um eine Kettenführungs-Lenkerachse (L2, L4) schwenkbar mit der Kettenführungsanordnung (44) verbunden ist, wobei das Kettenschaltwerk (34) eine Kurvenscheibe (90) aufweist, welche mit einem der Parallelogrammlenker (50, 52) als Master-Lenker (50) zur gemeinsamen Bewegung verbunden ist, wobei die Kurvenscheibe (90) dazu ausgebildet ist, ein zur gemeinsamen Bewegung mit dem Master-Lenker (50) gekoppeltes Seilende des Verlagerungs-Seilzug-Abschnitts (27) vom Master-Lenker (50) weg längs eines Anlagebereichs (89) an einer an der Kurvenscheibe (90) ausgebildeten Anlagebahn (88) anliegend zu führen.

4. Kettenschaltwerk (34) nach Anspruch 3,
**dadurch gekennzeichnet, dass** es den Verlagerungs-Seilzug-Abschnitt (27) aufweist, welcher den Master-Lenker (50) mit der Verlagerungs-Umlenkkontur (78) zur gemeinsamen Bewegung koppelt, wobei für wenigstens den halben gemeinsamen Bewegungsbereich von Kurvenscheibe (90) und Verlagerungs-Umlenkkontur (78) gilt, dass eine frei zwischen der Kurvenscheibe (90) und der Verlagerungs-Umlenkkontur (78) verlaufende Seillänge des Verlagerungs-Seilzug-Abschnitts (27) unabhängig von der jeweiligen betriebsgemäßen Drehstellung von Kurvenscheibe (90) und Verlagerungs-Umlenkkontur (78) sowohl tangential zu der Anlagebahn (88) der Kurvenscheibe (90) als auch tangential zur Verlagerungs-Umlenkkontur (78) verläuft.

5. Kettenschaltwerk (34) nach Anspruch 3 oder 4,
**dadurch gekennzeichnet, dass** die Kurvenscheibe (90) und die Verlagerungs-Umlenkkontur (78) jeweils ebene Strukturen sind, wobei ihre Erstreckungsebenen einen Winkel von mehr als 65°, vorzugsweise von nicht weniger als 70° einschließen und einen Winkel von 90° oder weniger, vorzugsweise von nicht mehr als 80° einschließen.

6. Kettenschaltwerk (34) nach einem der Ansprüche 3 bis 5,
**dadurch gekennzeichnet, dass** die Kurvenscheibe (90) an einem Aufnahmebauteil aus Basisbauteil (40) und Kettenführungsanordnung (44) mittels eines eine Lenkerachse (L1) des Master-Lenkers (50) definierenden Lagerbauteils zur gemeinsamen Drehung mit dem Master-Lenker (50) um die Lenkerachse (L1) drehbar gelagert ist, wobei bevorzugt die Kurvenscheibe (90) axial bezüglich der Lenkerachse (L1) zwischen einem Abschnitt des Basisbauteils (40) und dem Master-Lenker (50) angeordnet ist oder/und wobei bevorzugt ein Bauteil aus Master-Lenker (50) und dem Aufnahmebauteil eine längs der Lenkerachse (L1) auskragende und um die Lenkerachse (L1) verlaufende Schürze (98) aufweist, welche eine das Lagerbauteil umgreifende Lagerformation (96) der Kurvenscheibe (90) bezogen auf die Lenkerachse (L1) radial außen umgibt.

7. Kettenschaltwerk (34) nach einem der Ansprüche 3 bis 6,
**dadurch gekennzeichnet, dass** die Kurvenscheibe (90) eine Ausnehmung (94) aufweist, welche von einem weiteren Lagerbauteil durchsetzt ist, das eine Lenkerachse (L3) jeweils anderen Lenkers (52) des Parallelogrammlenkergetriebe (42) definiert, welcher nicht der Master-Lenker (50) ist, wobei das weitere Lagerbauteil gemeinsam mit einem Randabschnitt der Ausnehmung (94) einen mechanischen Endanschlag zur Begrenzung der Drehbewegung der Kurvenscheibe (90) in wenigstens eine Drehrichtung bildet.

8. Kettenschaltwerk (34) nach einem der vorhergehenden Ansprüche,
**dadurch gekennzeichnet, dass** die Seilzug-Festlegeformation (66) um eine Wippenachse (W) relativ zum Basisbauteil (40) schwenkbar angeordnet ist.

9. Kettenschaltwerk (34) nach einem der vorhergehenden Ansprüche,
**dadurch gekennzeichnet, dass** es ein Seilkanalbauteil (68) aufweist, welches relativ zum Basisbauteil (40) unbeweglich an diesem festgelegt ist und welches gemeinsam mit der Schalt-Umlenkkontur (72) einen Seilkanal für einen am Schalt-Umschlingungsbereich (76) aufgenommenen Teil des Schalt-Seilzug-Abschnitts (25) bildet, wobei die Seilzug-Festlegeformation (66) an dem Seilkanalbauteil (68) schwenkbar gelagert ist.

10. Kettenschaltwerk (34) nach Anspruch 8 und 9,
**dadurch gekennzeichnet, dass** die Wippenachse (W) parallel zur Drehachse (D) orientiert ist oder/und den Seilkanal durchsetzt.

11. Kettenschaltwerk (34) nach einem der vorhergehenden Ansprüche,
**dadurch gekennzeichnet, dass** das Basisbauteil (40) zur Befestigung am Fahrrad (10) eine Befestigungsformation (58) aufweist, welche eine Befestigungsachse (B) definiert, längs der sich ein Befestigungsbauteil, wie Schraube, Radachse und dergleichen, zur Befestigung des Basisbauteils (40) am Fahrrad (10) erstreckt, wobei die Seilzug-Festlegeformation (66) eine Gleithülse (102) aufweist, welche zur Aufnahme der Seilhülle (105) ausgebildet ist, wobei die Länge der Gleithülse (102) dem Abstand eines Lagerortes der Gleithülse (102) von der Befestigungsachse, multipliziert mit wenigstens π/9 entspricht.

12. Kettenschaltwerk (34) nach einem der vorhergehenden Ansprüche,
**dadurch gekennzeichnet, dass** sich sowohl eine die Schalt-Umlenkkontur (72) tragende Schalt-Umlenkstruktur (71) als auch eine die Verlagerungs-Umlenkkontur (78) tragende Verlagerungs-Umlenkstruktur (80) um weniger als 270°, bevorzugt um weniger als 220° um die Drehachse (D) erstrecken.

13. Kettenschaltwerk (34) nach einem der vorhergehenden Ansprüche,
**dadurch gekennzeichnet, dass** die Schalt-Umlenkkontur (72) und die Verlagerungs-Umlenkkontur (78) relativ zueinander um einen vorbestimmten Versatzwinkel um die Drehachse (D) versetzt angeordnet sind.

14. Kettenschaltwerk (34) nach einem der Ansprüche 1 bis 10 unter Einbeziehung des Anspruchs 3,
**dadurch gekennzeichnet, dass** das Basisbauteil (40) zur Befestigung am Fahrrad (10) eine Befestigungsformation (58) aufweist, welche eine Befestigungsachse (B) definiert, längs der sich ein Befestigungsbauteil, wie Schraube, Radachse und dergleichen, zur Befestigung des Basisbauteils (40) am Fahrrad (10) erstreckt, wobei die Lenkerachsen (L1, L2, L3, L4) einen von Null verschiedenen Abstand zur Befestigungsachse (B) aufweisen und mit der Befestigungsachse (B) einen Winkel im Bereich von 75° bis 105° einschließen.

15. Kettenschaltwerk (34) nach einem der Ansprüche 1 bis 10,
**dadurch gekennzeichnet, dass** das Basisbauteil (40) zur Befestigung am Fahrrad (10) eine Befestigungsformation (58) aufweist, welche eine Befestigungsachse (B) definiert, längs der sich ein Befestigungsbauteil, wie Schraube, Radachse und dergleichen, zur Befestigung des Basisbauteils (40) am Fahrrad (10) erstreckt, wobei das Basisbauteil (40) wenigstens zwei längs der Befestigungsachse (B) mit Abstand voneinander angeordnete Befestigungsarme (40a, 40b) aufweist, wobei die Seilzug-Übersetzungsvorrichtung (70) an einem der beiden Befestigungsarme (40b) drehbar gelagert und im Bereich zwischen den beiden Befestigungsarmen (40a, 40b) angeordnet ist.

16. Kettenschaltwerk (34) nach einem der vorhergehenden Ansprüche,
**dadurch gekennzeichnet, dass** es den von der Schalt-Betätigungsvorrichtung (24) zum Kettenschaltwerk (34) verlaufenden Schalt-Seilzug-Abschnitt (25) und den zwischen der Verlagerungs-Umlenkkontur (78) und der Bewegungskopplungsvorrichtung (42) verlaufenden Verlagerungs-Seilzug-Abschnitt (27) aufweist.

17. Fahrrad (10) mit einer Hinterrad-Kettenschaltung (26) und mit einem Kettenschaltwerk (34) nach Anspruch 16, wobei das Basisbauteil (40) an der Hinterachse (H) des Hinterrads (14) oder an einem Ausfallende (60) des Fahrradrahmens (20) angeordnet ist oder/und wobei ein Teil des Schalt-Seilzug-Abschnitts (25) durch eine Kettenstrebe (64)
des Fahrradrahmens verläuft.

## Claims

1. Derailleur mechanism (34) for a rear wheel derailleur (26) of a bicycle (10), comprising:
- a base component (40) which is configured to be immovably fastened to the bicycle (10) relative to a bicycle frame (20) during its intended gear shift operation,
- a movement coupling device (42) and
- a chain guide arrangement (44) which is displaceably coupled to the base component (40) by means of the movement coupling device (42) in a translatory manner relative to the base component (40),
- a cable pull securing formation (66) which is configured for supporting a cable sheath (105) and for passing through a cable (107) of a gear shift cable pull portion (25) running from a gear shift actuating device (24) to the derailleur mechanism (34),
- a cable pull transmission device (70) which is rotatably arranged about a rotational axis (D) on the base component (40), wherein the cable pull transmission device (70) has a gear shift deflection contour (72) which surrounds the rotational axis (D) with a larger radial spacing (R) and has a displacement deflection contour (78) which surrounds the rotational axis (D) with a smaller radial spacing (r), wherein the gear shift deflection contour (72) and the displacement deflection contour (78) are connected together for common rotational movement about the rotational axis (D), wherein the gear shift deflection contour (72) is configured to receive the gear shift cable pull portion (25) so as to bear along a gear shift winding region (76),
and wherein the displacement deflection contour (78) is configured to receive a displacement cable pull portion (27) running between the displacement deflection contour (78) and the movement coupling device (42) so as to bear along a displacement winding region (86),
**characterized in that** the larger radial spacing (R) or/and the smaller radial spacing (r) has a non-uniform value over the respective winding region (76, 86), so that the cable pull transmission device (70), over its rotational angular range about the rotational axis (D) which is effective during operation, provides a variable transmission ratio as a function of the rotational position of the cable pull transmission device (70) relative to the base component (40).

2. Derailleur mechanism (34) according to Claim 1, **characterized in that** the displacement deflection contour (78) extends eccentrically about the rotational axis (D) such that the radial spacing (r) of the displacement deflection contour (78) from the rotational axis (D), starting from a minimum displacement winding region (86), with an increasing winding angle of the displacement winding region (86) firstly reduces to a minimum value of the smaller radius (r), and starting therefrom becomes larger again, wherein preferably the location of the minimum value of the smaller radius (r) is located closer to a longitudinal end of the displacement winding region (86) located more remotely from the movement coupling device (42) than to the longitudinal end of the displacement winding region (86) located closer to the movement coupling device (42).

3. Derailleur mechanism (34) according to Claim 1 or 2,
**characterized in that** the movement coupling device (42) comprises a parallelogram connecting rod gear system (42) with two parallelogram connecting rods (50, 52) which in each case have an articulated region on the base component side and an articulated region on the chain guide side, wherein each parallelogram connecting rod (50, 52) is pivotably connected to the base component (40) at its articulated region on the base component side about a base connecting rod axis (L1, L3), and is pivotably connected to the chain guide arrangement (44) at its articulated region on the chain guide side about a chain guide connecting rod axis (L2, L4), wherein the derailleur mechanism (34) has a cam disc (90) which is connected to one of the parallelogram connecting rods (50, 52) as the master connecting rod (50) for common movement, wherein the cam disc (90) is configured to guide a cable end of the displacement cable pull portion (27), coupled to the master connecting rod (50) for common movement, away from the master connecting rod (50) along a bearing region (89) so as to bear against a bearing track (88) configured on the cam disc (90).

4. Derailleur mechanism (34) according to Claim 3, **characterized in that** it comprises the displacement cable pull portion (27) which couples the master connecting rod (50) to the displacement deflection contour (78) for common movement, wherein for at least half of the common movement range of the cam disc (90) and the displacement deflection contour (78) it applies that a cable length of the displacement cable pull portion (27), freely running between the cam disc (90) and the displacement deflection contour (78), runs independently of the respective operating rotational position of the cam disc (90) and the displacement deflection contour (78) both tangentially to the bearing track (88) of the cam disc (90) and tangentially to the displacement deflection contour (78).

5. Derailleur mechanism (34) according to Claim 3 or 4,
**characterized in that** the cam disc (90) and the displacement deflection contour (78) in each case are planar structures, wherein their extension planes enclose an angle of more than 65°, preferably of not less than 70°, and enclose an angle of 90° or less, preferably of not more than 80°.

6. Derailleur mechanism (34) according to one of Claims 3 to 5,
**characterized in that** the cam disc (90) is rotatably mounted on a receiving component consisting of the base component (40) and the chain guide arrangement (44) by means of a bearing component defining a connecting rod axis (L1) of the master connecting rod (50) for common rotation with the master connecting rod (50) about the connecting rod axis (L1), wherein the cam disc (90) is preferably arranged axially relative to the connecting rod axis (L1) between a portion of the base component (40) and the master connecting rod (50) or/and wherein preferably a component consisting of the master connecting rod (50) and the receiving component has an apron (98) which protrudes along the connecting rod axis (L1) and which runs about the connecting rod axis (L1) and which surrounds a bearing formation (96) of the cam disc (90) encompassing the bearing component radially outwardly relative to the connecting rod axis (L1).

7. Derailleur mechanism (34) according to one of Claims 3 to 6,
**characterized in that** the cam disc (90) has a recess (94) which is passed through by a further bearing component which defines a connecting rod axis (L3) of the other respective connecting rod (52) of the parallelogram connecting rod gear system (42), which is not the master connecting rod (50), wherein the further bearing component together with an edge portion of the recess (94) forms a mechanical end stop for limiting the rotational movement of the cam disc (90) in at least one rotational direction.

8. Derailleur mechanism (34) according to one of the preceding claims,
**characterized in that** the cable pull securing formation (66) is pivotably arranged about a rocker axis (W) relative to the base component (40).

9. Derailleur mechanism (34) according to one of the preceding claims,
**characterized in that** it has a cable channel component (68) which relative to the base component (40) is immovably secured thereto and which together with the gear shift deflection contour (72) forms a cable channel for a part of the gear shift cable pull portion (25) received on the gear shift winding region (76), wherein the cable pull securing formation (66) is pivotably mounted on the cable channel component (68).

10. Derailleur mechanism (34) according to Claim 8 or 9,
**characterized in that** the rocker axis (W) is oriented parallel to the rotational axis (D) or/and passes through the cable channel.

11. Derailleur mechanism (34) according to one of the preceding claims,
**characterized in that** the base component (40) for fastening to the bicycle (10) has a fastening formation (58) which defines a fastening axis (B), along which a fastening component such as a screw, wheel axle and the like, extends for fastening the base component (40) to the bicycle (10), wherein the cable pull securing formation (66) has a sliding sheath (102) which is configured for receiving the cable sheath (105), wherein the length of the sliding sheath (102) corresponds to the spacing of a bearing point of the sliding sheath (102) from the fastening axis, multiplied by at least n/9.

12. Derailleur mechanism (34) according to one of the preceding claims,
**characterized in that** both a gear shift deflection structure (71) bearing the gear shift deflection contour (72) and a displacement deflection structure (80) bearing the displacement deflection contour (78) extend by less than 270°, preferably by less than 220° about the rotational axis (D).

13. Derailleur mechanism (34) according to one of the preceding claims,
**characterized in that** the gear shift deflection contour (72) and the displacement deflection contour (78) are arranged offset relative to one another about a predetermined offset angle about the rotational axis (D).

14. Derailleur mechanism (34) according to one of Claims 1 to 10 with reference to Claim 3, **characterized in that** the base component (40) for fastening to the bicycle (10) has a fastening formation (58) which defines a fastening axis (B), along which a fastening component such as a screw, wheel axle and the like, extends for fastening the base component (40) to the bicycle (10), wherein the connecting rod axes (L1, L2, L3, L4) have a spacing from the fastening axis (B) which is different from zero and with the fastening axis (B) enclose an angle ranging from 75° to 105°.

15. Derailleur mechanism (34) according to one of Claims 1 to 10,
**characterized in that** the base component (40) for fastening to the bicycle (10) has a fastening formation (58) which defines a fastening axis (B), along which a fastening component such as a screw, wheel axle and the like, extends for fastening the base component (40) to the bicycle (10), wherein the base component (40) has at least two fastening arms (40a, 40b) arranged at a spacing from one another along the fastening axis (B), wherein the cable pull transmission device (70) is rotatably mounted on one of the two fastening arms (40b) and is arranged in the region between the two fastening arms (40a, 40b).

16. Derailleur mechanism (34) according to one of the preceding claims,
**characterized in that** it has the gear shift cable pull portion (25) running from the gear shift actuating device (24) to the derailleur mechanism (34) and the displacement cable pull portion (27) running between the displacement deflection contour (78) and the movement coupling device (42) .

17. Bicycle (10) having a rear wheel derailleur (26) and having a derailleur mechanism (34) according to Claim 16, wherein the base component (40) is arranged on the rear axis (H) of the rear wheel (14) or on a dropout end (60) of the bicycle frame (20) or/and wherein a part of the gear shift cable pull portion (25) runs through a chainstay (64) of the bicycle frame.

## Revendications

1. Dérailleur arrière de chaîne (34) pour un changement de vitesse par dérailleur de roue arrière (26) d'une bicyclette (10), comportant :
- un composant de base (40), lequel est réalisé pour être fixé de manière non mobile à la bicyclette (10) par rapport à un cadre de bicyclette (20) pendant son fonctionnement de changement de vitesse correct,
- un dispositif de couplage de mouvement (42) et
- un ensemble guide-chaîne (44), lequel est couplé au composant de base (40) de manière déplaçable en translation par rapport au composant de base (40) au moyen du dispositif de couplage de mouvement (42),
- une formation de fixation de câble sous gaine (66), laquelle est réalisée pour le support d'une gaine de câble (105) et pour le passage d'un câble (107) d'une portion de câble sous gaine de changement de vitesse (25) s'étendant d'un dispositif d'actionnement de changement de vitesse (24) au dérailleur arrière de chaîne (34),
- un dispositif de transmission de câble sous gaine (70), lequel est disposé sur le composant de base (40) de manière rotative autour d'un axe de rotation (D), le dispositif de transmission de câble sous gaine (70) présentant un contour de déviation de changement de vitesse (72), lequel entoure l'axe de rotation (D) avec une plus grande distance radiale (R), et présente un contour de déviation de déplacement (78), lequel entoure l'axe de rotation (D) avec une plus petite distance radiale (r), le contour de déviation de changement de vitesse (72) et le contour de déviation de déplacement (78) étant reliés l'un à l'autre pour le mouvement rotatif commun autour de l'axe de rotation (D), le contour de déviation de changement de vitesse (72) étant réalisé pour recevoir la portion de câble sous gaine de changement de vitesse (25) de manière à s'appuyer le long d'une région d'enroulement de changement de vitesse (76), et le contour de déviation de déplacement (78) étant réalisé pour recevoir une portion de câble sous gaine de déplacement (27) s'étendant entre le contour de déviation de déplacement (78) et le dispositif de couplage de mouvement (42) de manière à s'appuyer le long d'une région d'enroulement de déplacement (86),
**caractérisé en ce que** la plus grande distance radiale (R) et/ou la plus petite distance radiale (r) présente(nt) une valeur non constante sur la région d'enroulement (76, 86) respective, de sorte que le dispositif de transmission de câble sous gaine (70), sur sa plage angulaire de rotation autour de l'axe de rotation (D) qui est active lors du fonctionnement, produise un rapport de transmission variable dépendant de la position de rotation du dispositif de transmission de câble sous gaine (70) par rapport au composant de base (40).

2. Dérailleur arrière de chaîne (34) selon la revendication 1,
**caractérisé en ce que** le contour de déviation de déplacement (78) s'étend de manière excentrique autour de l'axe de rotation (D), de telle sorte que la distance radiale (r) du contour de déviation de déplacement (78) à l'axe de rotation (D), à partir d'une région d'enroulement de déplacement minimale (86), diminue tout d'abord jusqu'à une valeur minimale du plus petit rayon (r) au fur et à mesure que l'angle d'enroulement de la région d'enroulement de déplacement (86) augmente puis, à partir de cette valeur minimale, augmente à nouveau, l'emplacement de la valeur minimale du plus petit rayon (r) étant situé plus près d'une extrémité longitudinale de la région d'enroulement de déplacement (86) située plus loin du dispositif de couplage de mouvement (42) que de l'extrémité longitudinale de la région d'enroulement de déplacement (86) située plus près du dispositif de couplage de mouvement (42).

3. Dérailleur arrière de chaîne (34) selon la revendication 1 ou 2,
**caractérisé en ce que** le dispositif de couplage de mouvement (42) comporte une transmission à bras de parallélogramme (42), dotée de deux bras de parallélogramme (50, 52), lesquels présentent respectivement une région d'articulation côté composant de base et une région d'articulation côté guide-chaîne, chaque bras de parallélogramme (50, 52) étant relié au composant de base (40) au niveau de sa région d'articulation côté composant de base de manière pivotante autour d'un axe de bras de base (L1, L3) et étant relié à l'ensemble guide-chaîne (44) au niveau de sa région d'articulation côté guide-chaîne de manière pivotante autour d'un axe de bras de guide-chaîne (L2, L4), le dérailleur arrière de chaîne (34) présentant un disque à came (90), lequel est relié à l'un des bras de parallélogramme (50, 52) en tant que bras maître (50) pour le mouvement commun, le disque à came (90) étant réalisé pour guider une extrémité de câble, couplée pour le mouvement commun avec le bras maître (50), de la portion de câble sous gaine de déplacement (27) à l'écart du bras maître (50) le long d'une région d'appui (89) de manière à s'appuyer contre une voie d'appui (88) réalisée sur le disque à came (90).

4. Dérailleur arrière de chaîne (34) selon la revendication 3,
**caractérisé en ce qu'**il présente la portion de câble sous gaine de déplacement (27), laquelle couple le bras maître (50) au contour de déviation de déplacement (78) pour le mouvement commun, et pour au moins la moitié de la plage de mouvement commune du disque à came (90) et du contour de déviation de déplacement (78), une longueur de câble, s'étendant librement entre le disque à came (90) et le contour de déviation de déplacement (78), de la portion de câble sous gaine de déplacement (27), s'étendant indépendamment de la position de rotation de fonctionnement respective du disque à came (90) et du contour de déviation de déplacement (78) à la fois tangentiellement à la voie d'appui (88) du disque à came (90) et tangentiellement au contour de déviation de déplacement (78).

5. Dérailleur arrière de chaîne (34) selon la revendication 3 ou 4,
**caractérisé en ce que** le disque à came (90) et le contour de déviation de déplacement (78) sont des structures respectivement planes, leurs plans d'étendue formant un angle de plus de 65°, de préférence de pas moins de 70° et un angle de 90° ou moins, de préférence de pas plus de 80°.

6. Dérailleur arrière de chaîne (34) selon l'une des revendications 3 à 5,
**caractérisé en ce que** le disque à came (90) est monté rotatif sur un composant de réception constitué du composant de base (40) et de l'ensemble guide-chaîne (44) au moyen d'un composant de palier définissant un axe de bras (L1) du bras maître (50) pour la rotation commune avec le bras maître (50) autour de l'axe de bras (L1), le disque à came (90) étant de préférence disposé axialement par rapport à l'axe de bras (L1) entre une portion du composant de base (40) et le bras maître (50) et/ou un composant constitué du bras maître (50) et du composant de réception présentant de préférence une jupe (98) faisant saillie le long de l'axe de bras (L1) et s'étendant autour de l'axe de bras (L1), laquelle jupe entoure une formation de palier (96), venant en prise autour du composant de palier, du disque à came (90) radialement à l'extérieur par rapport à l'axe de bras (L1).

7. Dérailleur arrière de chaîne (34) selon l'une des revendications 3 à 6,
**caractérisé en ce que** le disque à came (90) présente un évidement (94), lequel est traversé par un autre composant de palier qui définit un axe de bras (L3) de respectivement un autre bras (52) de la transmission à bras de parallélogramme (42), lequel autre bras n'est pas le bras maître (50), l'autre composant de palier formant, conjointement avec une portion de bord de l'évidement (94), une butée mécanique de fin de course pour la limitation du mouvement rotatif du disque à came (90) dans au moins un sens de rotation.

8. Dérailleur arrière de chaîne (34) selon l'une des revendications précédentes,
**caractérisé en ce que** la formation de fixation de câble sous gaine (66) est disposée de manière pivotante par rapport au composant de base (40) autour d'un axe de basculement (W).

9. Dérailleur arrière de chaîne (34) selon l'une des revendications précédentes,
**caractérisé en ce qu'**il présente un composant de canal pour câble (68), lequel est fixé au composant de base (40) de manière non mobile par rapport à celui-ci et lequel, conjointement avec le contour de déviation de changement de vitesse (72), forme un canal pour câble pour une partie de la portion de câble sous gaine de changement de vitesse (25) reçue au niveau de la région d'enroulement de changement de vitesse (76), la formation de fixation de câble sous gaine (66) étant montée pivotante sur le composant de canal pour câble (68).

10. Dérailleur arrière de chaîne (34) selon les revendications 8 et 9,
**caractérisé en ce que** l'axe de basculement (W) est orienté parallèlement à l'axe de rotation (D) et/ou traverse le canal pour câble.

11. Dérailleur arrière de chaîne (34) selon l'une des revendications précédentes,
**caractérisé en ce que** le composant de base (40) présente une formation de fixation (58) pour la fixation à la bicyclette (10), laquelle formation définit un axe de fixation (B) le long duquel s'étend un composant de fixation tel qu'une vis, un axe de roue et similaire, pour la fixation du composant de base (40) à la bicyclette (10), la formation de fixation de câble sous gaine (66) présentant une douille de glissement (102), laquelle est réalisée pour la réception de la gaine de câble (105), la longueur de la douille de glissement (102) correspondant à la distance d'un emplacement d'appui de la douille de glissement (102) à l'axe de fixation, multipliée par au moins π/9.

12. Dérailleur arrière de chaîne (34) selon l'une des revendications précédentes,
**caractérisé en ce qu'**à la fois une structure de déviation de changement de vitesse (71) supportant le contour de déviation de changement de vitesse (72) et une structure de déviation de déplacement (80) supportant le contour de déviation de déplacement (78) s'étendent sur moins de 270°, de préférence sur moins de 220° autour de l'axe de rotation (D).

13. Dérailleur arrière de chaîne (34) selon l'une des revendications précédentes,
**caractérisé en ce que** le contour de déviation de changement de vitesse (72) et le contour de déviation de déplacement (78) sont disposés de manière décalée l'un par rapport à l'autre d'un angle de décalage prédéfini autour de l'axe de rotation (D).

14. Dérailleur arrière de chaîne (34) selon l'une des revendications 1 à 10 en tenant compte de la revendication 3,
**caractérisé en ce que** le composant de base (40) présente, pour la fixation à la bicyclette (10), une formation de fixation (58), laquelle définit un axe de fixation (B) le long duquel s'étend un composant de fixation tel qu'une vis, un axe de roue et similaire, pour la fixation du composant de base (40) à la bicyclette (10), les axes de bras (L1, L2, L3, L4) présentant une distance à l'axe de fixation (B) différente de zéro et formant avec l'axe de fixation (B) un angle dans la plage de 75° à 105°.

15. Dérailleur arrière de chaîne (34) selon l'une des revendications 1 à 10,
**caractérisé en ce que** le composant de base (40) présente, pour la fixation à la bicyclette (10), une formation de fixation (58), laquelle définit un axe de fixation (B) le long duquel s'étend un composant de fixation tel qu'une vis, un axe de roue et similaire, pour la fixation du composant de base (40) à la bicyclette (10), le composant de base (40) présentant au moins deux bras de fixation (40a, 40b) disposés à distance les uns des autres le long de l'axe de fixation (B), le dispositif de transmission de câble sous gaine (70) étant monté rotatif sur l'un des deux bras de fixation (40b) et étant disposé dans la région entre les deux bras de fixation (40a, 40b).

16. Dérailleur arrière de chaîne (34) selon l'une des revendications précédentes,
**caractérisé en ce qu'**il présente la portion de câble sous gaine de changement de vitesse (25) s'étendant du dispositif d'actionnement de changement de vitesse (24) au dérailleur arrière de chaîne (34) et la portion de câble sous gaine de déplacement (27) s'étendant entre le contour de déviation de déplacement (78) et le dispositif de couplage de mouvement (42).

17. Bicyclette (10) dotée d'un changement de vitesse par dérailleur de roue arrière (26) et d'un dérailleur arrière de chaîne (34) selon la revendication 16, le composant de base (40) étant disposé au niveau de l'axe arrière (H) de la roue arrière (14) ou au niveau d'une patte arrière (60) du cadre de bicyclette (20) et/ou une partie de la portion de câble sous gaine de changement de vitesse (25) s'étendant à travers une base (64) du cadre de bicyclette.
